(19) Europäisches Patentamt / European Patent Office / Office européen des brevets

(11) **EP 4 317 505 A1**

(12) **EUROPEAN PATENT APPLICATION**
published in accordance with Art. 153(4) EPC

(43) Date of publication:
**07.02.2024 Bulletin 2024/06**

(21) Application number: **22781059.5**

(22) Date of filing: **30.03.2022**

(51) International Patent Classification (IPC):
**C22C 38/00** (2006.01)   **B23K 9/23** (2006.01)
**B23K 35/30** (2006.01)   **C22C 38/54** (2006.01)

(52) Cooperative Patent Classification (CPC):
**B23K 9/23; B23K 35/30; C22C 38/00; C22C 38/54**

(86) International application number:
**PCT/JP2022/015859**

(87) International publication number:
**WO 2022/210849 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021060667**

(71) Applicant: NIPPON STEEL CORPORATION
Chiyoda-ku
Tokyo 100-8071 (JP)

(72) Inventors:
• OSUKI, Takahiro
  Tokyo 100-8071 (JP)
• AOTA, Shohgo
  Tokyo 100-8071 (JP)
• IZAWA, Takahiro
  Tokyo 100-8071 (JP)
• KURIHARA, Shinnosuke
  Tokyo 100-8071 (JP)

(74) Representative: **Zimmermann & Partner
Patentanwälte mbB**
Postfach 330 920
80069 München (DE)

(54) **TWO-PHASE STAINLESS STEEL WELDED JOINT**

(57) A duplex stainless steel welded joint is provided that can suppress undercuts and is excellent in fatigue characteristics. The duplex stainless steel welded joint includes a base metal, and a weld metal consisting of, in mass%, C: 0.001% to 0.030%, Si: 0.05% to 0.70%, Mn: 0.05% to 0.85%, P: 0.030% or less, S: 0.0030% or less, Cr: 21.00% to 28.00%, Ni: 5.00% to 11.00%, Mo: 2.00% to 4.50%, Cu: 0.01 to 4.00%, sol. Al: 0.0010 to 0.0500%, N: 0.080% to 0.400%, and B: 0.0001 to 0.0100%, with the balance being Fe and impurities, and satisfies the content of each element in the base metal and the weld metal, and also satisfies Formula (1) and Formula (2).

FIG 2

$$Si + 3Mn \leq 3.00 \quad (1)$$

$$0 < BH/BW < 0.15 \quad (2)$$

**Description**

TECHNICAL FIELD

The present disclosure relates to a duplex stainless steel welded joint.

BACKGROUND ART

Duplex stainless steels have high strength and excellent corrosion resistance under a chloride environment. Therefore, duplex stainless steels are used in a wide range of technical fields. Duplex stainless steels are used, for example, as the material of pipes for seawater heat exchangers and as the material of pipes for umbilical cables for offshore development.

Specifications for duplex stainless steels are defined in the JIS Standard (Japanese Industrial Standards) and the ASTM Standard according to the required applications. For example, SUS 329J3L and SUS 329J4L are defined in the JIS Standard. Recently, SUS 327L1 has been newly added to the JIS standard as a super duplex stainless steel with a pitting index (PREW) of more than 40. In addition, ASTM A789 S39274, which is a super duplex stainless steel, has also been developed and put into practical use. In the duplex stainless steel defined as by ASTM A789 S39274, the PREW is increased to achieve high strength and high corrosion resistance, and precipitation of sigma phase that accompanies the increased PREW is suppressed by addition of a large amount of W.

In this connection, when a duplex stainless steel is welded and used, as the result of rapid cooling after welding, the amount of ferrite in the weld metal is significantly greater in comparison to the amount of ferrite in the base metal of the duplex stainless steel. As a result, the strength and corrosion resistance of the weld metal decreases. Therefore, there is a demand for a welded joint which is excellent in strength and corrosion resistance even in an as-welded state.

A duplex stainless steel welded joint in which pitting resistance is enhanced is proposed, for example, in Japanese Patent Application No. 2015-196894 (Patent Literature 1). In the duplex stainless steel welded joint proposed in Patent Literature 1, the chemical composition of a base metal and a weld metal is, in mass%, C: 0.03% or less, Si: 0.5% or less, Mn: 2% or less, P: 0.04% or less, S: 0.003% or less, Cr: 21% or more to less than 29%, Ni: 4.0 to 10.5%, Mo: 0.8 to 4.0%, N: more than 0.1% to 0.4% or less, sol. Al: 0.040% or less, W: 0 to 4.0%, Cu: 0 to 4.0%, B: 0 to 0.005%, REM: 0 to 0.2%, and the balance: Fe and impurities. In addition, in the duplex stainless steel welded joint of Patent Literature 1, an austenite index obtained by Formula (1) below is 0.1 to 0.4, a PF index satisfying Mn/N $\geq$ 2 and obtained by Formula (2) below is 1.0 or less, and an oxide scale thickness formed on the surfaces of the base metal and the weld metal during welding is 500 nm or less.

$$a = \{Ni+30(C+N)-0.6(Cr+1.5Si+Mo)+5.6\}/\{Cr+1.5Si+Mo-6\} \quad (1)$$

$$PF = Mn\times(100Pb+50Sb+30Zn+40As) \quad (2)$$

Where, each symbol of an element in the above formulae represents the content (mass%) of the corresponding element. According to Patent Literature 1, the pitting resistance of a duplex stainless steel welded joint is enhanced by satisfying Formula (1) and Formula (2).

CITATION LIST

PATENT LITERATURE

Patent Literature 1: Japanese Patent Application Publication No. 2015-196894

SUMMARY OF INVENTION

TECHNICAL PROBLEM

In this connection, when using duplex stainless steel as an umbilical tube, duplex stainless steel tubes are welded together by peripheral welding to produce a duplex stainless steel welded joint. The duplex stainless steel welded joint is used as one part of an umbilical cable having a length of several kilometers to several tens of kilometers.

In order to enhance the welding workability and increase the welding efficiency, it is preferable that the duplex stainless steel tubes are thin. On the other hand, when used as pipes for an umbilical cable, the duplex stainless steel tubes are used for a long period of time while being rocked by waves. Therefore, the duplex stainless steel tubes are required to have high fatigue strength. If there is a defect in a weld toe portion of the duplex stainless steel welded joint, stress is liable to concentrate at that defect. As a result, a fatigue fracture is liable to occur for which the defect serves as the starting point. The thinner that a duplex stainless steel tube is, the greater that the ratio of defects in the shape of the weld metal with respect to the thickness of the duplex stainless steel tube will be.

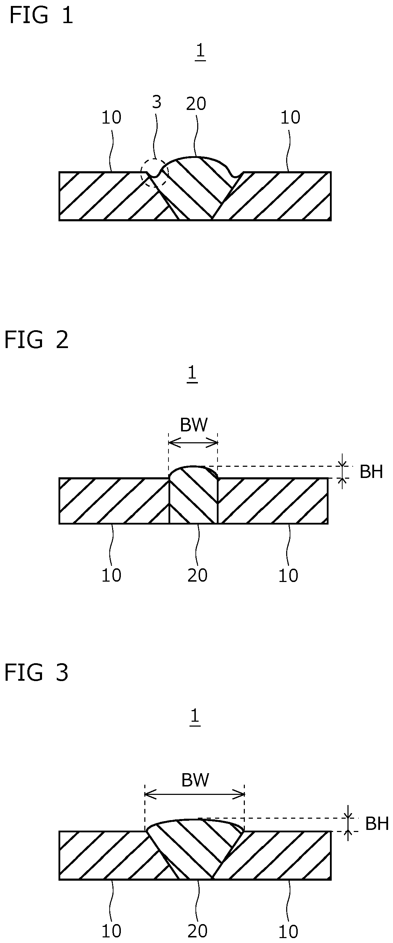

An undercut is one defect that is liable to occur at a weld toe portion. FIG. 1 is a cross-sectional view in a direction perpendicular to the extending direction of a weld metal 20, which includes the weld metal 20 of a duplex stainless steel welded joint 1 in which an undercut 3 occurred. Referring to FIG. 1, two base metals 10 are connected through a weld metal 20, and a groove is formed at an edge of the weld metal 20. This groove is an undercut 3. In a case where the duplex stainless steel welded joint 1 has the undercut 3 at an end portion of the weld metal 20, stress is liable to concentrate at the undercut 3 when the umbilical cable vibrates. Consequently, a fatigue fracture for which the undercut 3 serves as the starting point is liable to occur. In this case, there is a possibility that the life of the umbilical cable will be significantly less than the design criterion. Accordingly, a duplex stainless steel welded joint 1 that is capable of suppressing such undercuts 3 is desired.

An objective of the present disclosure is to provide a duplex stainless steel welded joint which is excellent in fatigue characteristics which can suppress undercuts.

SOLUTION TO PROBLEM

A duplex stainless steel welded joint of the present disclosure includes:

a base metal consisting of, in mass%,
C: 0.001% to 0.030%,
Si: 0.05% to 0.80%,
Mn: 0.05% to 1.20%,
P: 0.030% or less,
S: 0.0030% or less,
Cr: 21.00% to 28.00%,
Ni: 4.00% to 8.00%,
Mo: 2.00% to 4.50%,
Cu: 0.01 to 4.00%,
sol. Al: 0.0010 to 0.0500%,
N: 0.080% to 0.400%,
B: 0.0001 to 0.0100%,
W: 0 to 4.00%,
Nb: 0 to 0.10%,
V: 0 to 0.20%,
Ta: 0 to 0.30%,
Co: 0 to 1.00%,
Sn: 0 to 0.020%,
Mg: 0 to 0.0200%, and
Ca: 0 to 0.0100%,
with the balance being Fe and impurities;
and a weld metal consisting of, in mass%,
C: 0.001% to 0.030%,
Si: 0.05% to 0.70%,
Mn: 0.05% to 0.85%,
P: 0.030% or less,
S: 0.0030% or less,
Cr: 21.00% to 28.00%,
Ni: 5.00% to 11.00%,
Mo: 2.00% to 4.50%,
Cu: 0.01 to 4.00%,
sol. Al: 0.0010 to 0.0500%,
N: 0.080% to 0.400%,
B: 0.0001 to 0.0100%,
W: 0 to 4.00%,
Nb: 0 to 0.10%,

V: 0 to 0.20%,
Ta: 0 to 0.30%,
Co: 0 to 1.00%,
Sn: 0 to 0.020%,
Mg: 0 to 0.0200%, and
Ca: 0 to 0.0100%,
with the balance being Fe and impurities;
wherein:

a content of each element in the base metal and the weld metal is satisfied, and Formula (1) and Formula (2) are satisfied:

$$Si+3Mn \leq 3.00 \quad (1)$$

$$0 < BH/BW < 0.15 \quad (2)$$

where, a content of a corresponding element in the weld metal is substituted in percent by mass for each symbol of an element in Formula (1), and
where, in Formula (2), a cap height (mm) of the weld metal is substituted for BH, and a cap width (mm) of the weld metal is substituted for BW.

ADVANTAGEOUS EFFECTS OF INVENTION

The duplex stainless steel welded joint of the present disclosure can suppress undercuts and is excellent in fatigue characteristics.

BRIEF DESCRIPTION OF DRAWINGS

[FIG. 1] FIG. 1 is a cross-sectional view including a weld metal of a duplex stainless steel welded joint in which an undercut occurred, which is a cross-sectional view perpendicular to the extending direction of the weld metal.
[FIG. 2] FIG. 2 is a cross-sectional view obtained by cutting a duplex stainless steel welded joint of the present embodiment in a direction perpendicular to an extending direction of a weld metal.
[FIG. 3] FIG. 3 is a cross-sectional view of a duplex stainless steel welded joint according to another embodiment that is different from the embodiment illustrated in FIG. 2.

DESCRIPTION OF EMBODIMENTS

The present embodiment is described in detail below with reference to the accompanying drawings. The same reference symbols are used throughout the drawings to refer to the same or like parts, and description thereof is not repeated.

First, the present inventors conducted studies regarding a chemical composition for obtaining the strength and corrosion resistance required for a duplex stainless steel welded joint 1. As a result, the present inventors have found that if the duplex stainless steel welded joint 1 includes: a base metal 10 consisting of, in mass%, C: 0.001% to 0.030%, Si: 0.05% to 0.80%, Mn: 0.05% to 1.20%, P: 0.030% or less, S: 0.0030% or less, Cr: 21.00% to 28.00%, Ni: 4.00% to 8.00%, Mo: 2.00% to 4.50%, Cu: 0.01 to 4.00%, sol. Al: 0.0010 to 0.0500%, N: 0.080% to 0.400%, B: 0.0001 to 0.0100%, W: 0 to 4.00%, Nb: 0 to 0.10%, V: 0 to 0.20%, Ta: 0 to 0.30%, Co: 0 to 1.00%, Sn: 0 to 0.020%, Mg: 0 to 0.0200%, and Ca: 0 to 0.0100%, with the balance being Fe and impurities; and a weld metal 20 consisting of, in mass%, C: 0.001% to 0.030%, Si: 0.05% to 0.70%, Mn: 0.05% to 0.85%, P: 0.030% or less, S: 0.0030% or less, Cr: 21.00% to 28.00%, Ni: 5.00% to 11.00%, Mo: 2.00% to 4.50%, Cu: 0.01 to 4.00%, sol. Al: 0.0010 to 0.0500%, N: 0.080% to 0.400%, B: 0.0001 to 0.0100%, W: 0 to 4.00%, Nb: 0 to 0.10%, V: 0 to 0.20%, Ta: 0 to 0.30%, Co: 0 to 1.00%, Sn: 0 to 0.020%, Mg: 0 to 0.0200%, and Ca: 0 to 0.0100%, with the balance being Fe and impurities, excellent strength and excellent corrosion resistance are obtained.

Next, the present inventors conducted various studies regarding means that can suppress an undercut 3 as illustrated in FIG. 1, with respect to the duplex stainless steel welded joint 1 having the aforementioned chemical composition. As a result, the present inventors obtained the following findings which are different from the conventional findings. Note that, in the present description, the term "molten metal" refers to metal in a molten state (that is, a molten pool) when performing welding using a welding consumable. The molten metal solidifies to form the weld metal 20.

Because a duplex stainless steel has a high content of Cr, the viscosity of the molten metal during welding is high. Therefore, the wettability of the molten metal with respect to the base metal 10 during welding is low. If the wettability of molten metal during welding is low, the undercut 3 is liable to occur. Therefore, the present inventors considered that if the wettability of the molten metal with respect to the base metal 10 during welding is increased, the undercut 3 can be suppressed.

First, the present inventors thought that by lowering the viscosity of the molten metal during welding, the wettability of the molten metal with respect to the base metal 10 during welding can be increased and the undercut 3 can be suppressed. As mentioned above, Cr increases the viscosity. Therefore, it is also conceivable to reduce the content of Cr. However, it is necessary to contain a prescribed amount of Cr in order to obtain the strength and corrosion resistance required for the duplex stainless steel welded joint 1. Hence, it is difficult to reduce the content of Cr.

Therefore, the present inventors conducted studies on elements other than Cr to determine what influence such elements have on the viscosity of the molten metal during welding. As a result, the present inventors discovered that in a duplex stainless steel having the aforementioned chemical composition, Si influences the viscosity of the molten metal during welding.

Si increases the viscosity of the molten metal during welding. Therefore, the present inventors thought of reducing the viscosity of the molten metal during welding by decreasing the amount of Si. By this means, the velocity of the outward Marangoni convection during welding is increased, and during welding the molten metal tends to spread in the width direction of the weld metal 20. It is considered that, as a result, the wettability of the molten metal with respect to the base metal 10 during welding increases.

However, when only the content of Si was adjusted, the undercut 3 still occurred. Therefore, the present inventors investigated methods for suppressing the undercut 3 from a different viewpoint to the viewpoint of the viscosity of the molten metal during welding.

Here, the present inventors focused on the surface tension of the molten metal during welding. As a result, the present inventors obtained the following finding.

Mn raises the temperature coefficient of the surface tension of the molten metal during welding. The temperature coefficient of the surface tension of the molten metal during welding is decreased by reducing the Mn amount. If the Mn amount is reduced, a difference between the surface tension at a central part of the weld metal 20 where the temperature is high and the surface tension at a peripheral part of the weld metal 20 where the temperature is low decreases. Consequently, the wettability of the molten metal with respect to the base metal 10 during welding increases.

The present inventors conducted more detailed studies regarding the content of Si and the content of Mn in the weld metal 20. The present inventors considered that if the content of Si and content of Mn in the weld metal 20 are adjusted to within ranges which have an appropriate relation, the wettability of the molten metal during welding will increase, and the undercut 3 in the duplex stainless steel welded joint 1 can be suppressed. Therefore, the present inventors investigated the relation

between the content of Si and the content of Mn in the weld metal 20. As a result, the present inventors have found that it is necessary for the duplex stainless steel having the aforementioned chemical composition to satisfy Formula (1).

$$Si + 3Mn \leq 3.00 \qquad (1)$$

Where, a content of a corresponding element in the weld metal 20 is substituted in percent by mass for each symbol of an element in Formula (1).

When the chemical composition of the weld metal 20 is within the aforementioned range and also satisfies Formula (1), the viscosity of the molten metal during welding can be reduced and, in addition, the temperature coefficient of the surface tension of the molten metal during welding can be reduced. As a result, the wettability of the molten metal during welding increases.

The present inventors conducted more detailed studies and have found that, in the duplex stainless steel welded joint 1 having the aforementioned chemical composition, the undercut 3 can be suppressed only when Formula (1) is satisfied and the wettability of the molten metal during welding is thereby increased, and in addition, the shape of the weld metal 20 is adjusted. Specifically, the undercut 3 can be suppressed by the weld metal 20 satisfying Formula (1) and, furthermore, the shape of the weld metal 20 satisfying Formula (2).

$$0 < BH/BW < 0.15 \qquad (2)$$

Where, in Formula (2), a cap height (mm) of the weld metal 20 is substituted for BH, and a cap width (mm) of the weld metal 20 is substituted for BW.

If the surface tension of the molten metal during welding increases, the weld metal 20 that is formed will tend to have a convex shape, and the undercut 3 will be liable to occur. Therefore, if the chemical composition and Formula (1) are satisfied to thus increase the wettability of the molten metal during welding and, in addition, a convex shape of the weld metal 20 is suppressed so as to satisfy Formula (2), the undercut 3 can be suppressed and the fatigue characteristics will be enhanced.

The gist of the duplex stainless steel welded joint 1 according to the present embodiment, which has been completed based on the above findings, is as follows.

[1] A duplex stainless steel welded joint, including:

a base metal consisting of, in mass%,
C: 0.001% to 0.030%,
Si: 0.05% to 0.80%,
Mn: 0.05% to 1.20%,
P: 0.030% or less,
S: 0.0030% or less,
Cr: 21.00% to 28.00%,
Ni: 4.00% to 8.00%,
Mo: 2.00% to 4.50%,
Cu: 0.01 to 4.00%,
sol. Al: 0.0010 to 0.0500%,
N: 0.080% to 0.400%,
B: 0.0001 to 0.0100%,
W: 0 to 4.00%,
Nb: 0 to 0.10%,
V: 0 to 0.20%,
Ta: 0 to 0.30%,
Co: 0 to 1.00%,
Sn: 0 to 0.020%,
Mg: 0 to 0.0200%, and
Ca: 0 to 0.0100%,
with the balance being Fe and impurities;
and
a weld metal consisting of, in mass%,
C: 0.001% to 0.030%,
Si: 0.05% to 0.70%,
Mn: 0.05% to 0.85%,
P: 0.030% or less,
S: 0.0030% or less,
Cr: 21.00% to 28.00%,
Ni: 5.00% to 11.00%,
Mo: 2.00% to 4.50%,
Cu: 0.01 to 4.00%,
sol. Al: 0.0010 to 0.0500%,
N: 0.080% to 0.400%,
B: 0.0001 to 0.0100%,
W: 0 to 4.00%,
Nb: 0 to 0.10%,
V: 0 to 0.20%,
Ta: 0 to 0.30%,
Co: 0 to 1.00%,
Sn: 0 to 0.020%,
Mg: 0 to 0.0200%, and
Ca: 0 to 0.0100%,
with the balance being Fe and impurities;

wherein:

a content of each element in the base metal and the weld metal is satisfied, and Formula (1) and Formula (2) are satisfied:

$$Si+3Mn \leq 3.00 \quad (1)$$

$$0 < BH/BW < 0.15 \quad (2)$$

where, a content of a corresponding element in the weld metal is substituted in percent by mass for each symbol of an element in Formula (1), and
where, in Formula (2), a cap height (mm) of the weld metal is substituted for BH, and a cap width (mm) of the weld metal is substituted for BW.

[2] The duplex stainless steel welded joint according to [1], wherein:

in a case where a thickness of the base metal is 2.5 mm or less, Formula (3) and Formula (4) are also satisfied:

$$Si+4Mn \leq 3.75 \quad (3)$$

$$0 < BH/BW \leq 0.5/(6.0-0.85WT) \quad (4)$$

where, a content of a corresponding element in the weld metal is substituted in percent by mass for each symbol of an element in Formula (3), and
where, in Formula (4), a cap height (mm) of the weld metal is substituted for BH, a cap width (mm) of the weld metal is substituted for BW, and a thickness (mm) of the base metal is substituted for WT.

[3] The duplex stainless steel welded joint according to [1] or [2], wherein the base metal contains one or more elements selected from a group consisting of, in mass%,

W: 0.01 to 4.00%,
Nb: 0.01 to 0.10%,
V: 0.01 to 0.20%,
Ta: 0.01 to 0.30%,
Co: 0.01 to 1.00%,
Sn: 0.001 to 0.020%,
Mg: 0.0001 to 0.0200%, and
Ca: 0.0001 to 0.0100%.

[4] The duplex stainless steel welded joint according to any one of [1] to [3], wherein the weld metal contains one or more elements selected from a group consisting of, in mass%:

W: 0.01 to 4.00%,
Nb: 0.01 to 0.10%,
V: 0.01 to 0.20%,
Ta: 0.01 to 0.30%,
Co: 0.01 to 1.00%,
Sn: 0.001 to 0.020%,
Mg: 0.0001 to 0.0200%, and
Ca: 0.0001 to 0.0100%.

[Regarding configuration of welded joint of present embodiment]

FIG. 2 is a cross-sectional view illustrating a cross section obtained by cutting the duplex stainless steel welded joint 1 of the present embodiment in a perpendicular direction to the extending direction of the weld metal 20. Referring to FIG. 2, the duplex stainless steel welded joint 1 according to the present embodiment includes a pair of base metals 10 and the weld metal 20. The weld metal 20 is arranged between the pair of base metals 10. The weld metal 20 is arranged between the pair of base metals 10 and is connected to the pair of base metals 10.

The weld metal 20 is formed by butting together ends of the pair of base metals 10 and thereafter performing welding. It suffices to perform well-known welding as the welding. Examples of the welding include gas tungsten arc welding (GTAW), shielded metal arc welding (SMAW), flux cored metal arc welding (FCAW), gas metal arc welding (GMAW), and submerged arc welding (SAW).

FIG. 3 is a cross-sectional view of the duplex stainless steel welded joint 1 according to another embodiment that is different to the embodiment illustrated in FIG. 2. The end of each base metal 10 may be beveled as illustrated in FIG. 3 or, as illustrated in FIG. 2, need not be beveled. In a case where the thickness of the base metal 10 is, for example, more than 2.5 mm, it is preferable to perform so-called "multi pass welding" in which beveling of the ends of the base metals 10 is performed and welding is then performed multiple times. In a case where the thickness of the base metal 10 is, for example, 2.5 mm or less, so-called "single-layer single-pass welding" in which the ends of the base metals 10 are not beveled and welding is performed once may be performed. In the case of beveling the end of each base metal 10, the shape formed by the beveling is not particularly limited. The shape of the bevel at the end of the base metal 10 is, for example, selected from the group consisting of a V-shape bevel, a U-shape bevel, and an X-shape bevel.

[Regarding base metal]

The base metal 10 according to the present embodiment will now be described.

[Chemical composition of base metal]

The chemical composition of the base metal 10 according to the present embodiment contains the following elements.

C: 0.001 to 0.030%

Carbon (C) is an effective element for stabilizing the austenite phase. If the content of C is too low, even if the contents of other elements are within the range of the present embodiment, the amount of austenite in the weld metal 20 in an as-welded state will decrease, and the corrosion resistance and strength of the weld metal 20 will decrease. On the other hand, if the content of C is too high, even if the contents of other elements are within the range of the present embodiment, carbides will be liable to precipitate, and the corrosion resistance of the base metal 10 will decrease. Therefore, the content of C is to be 0.001 to 0.030%. A preferable lower limit of the content of C is 0.002%, more preferably 0.003%, further preferably 0.005%, and further preferably 0.010%. A preferable upper limit of the content of C is 0.028%, more preferably 0.025%, further preferably 0.023%, and further preferably 0.020%.

Si: 0.05 to 0.80%

Silicon (Si) deoxidizes the steel. If the content of Si is too low, even if the contents of other elements are within the range of the present embodiment, this effect will not be sufficiently obtained. On the other hand, Si stabilizes the ferrite phase. If the content of Si is too high, even if the contents of other elements are within the range of the present embodiment, the amount of ferrite in the weld metal 20 in an as-welded state will be large and the corrosion resistance and strength of the weld metal 20 will decrease. In addition, Si increases the viscosity of the molten metal during welding. Therefore, the content of Si is to be 0.05 to 0.80%. A preferable lower limit of the content of Si is 0.08%, more preferably 0.10%, further preferably 0.15%, further preferably 0.20%, further preferably 0.25%, further preferably 0.30%, further preferably 0.40%, and further preferably 0.50%. A preferable upper limit of the content of Si is 0.75%, more preferably 0.70%, further preferably 0.65%, and further preferably 0.60%.

Mn: 0.05 to 1.20%

Manganese (Mn) stabilizes the austenite phase. If the content of Mn is too low, even if the contents of other elements are within the range of the present embodiment, the amount of austenite in the weld metal 20 in an as-welded state will decrease, and the corrosion resistance and strength of the weld metal 20 will decrease. On the other hand, Mn increases the temperature coefficient of surface tension of the molten metal during welding. In other words, Mn increases the temperature dependence of the surface tension of the molten metal during welding. If the content of Mn is too high, even if the contents of other elements are within the range of the present embodiment, the wettability of the molten metal during welding will decrease. Therefore, the content of Mn is to be 0.05 to 1.20%. A preferable lower limit of the content of Mn is 0.08%, more preferably 0.10%, further preferably 0.20%, further preferably 0.30%, further preferably 0.40%, further preferably 0.50%, further preferably 0.60%, and further preferably 0.70%. A preferable upper limit of the content of Mn is 1.10%, more preferably 1.00%, further preferably 0.90%, further preferably 0.80%, and further preferably 0.70%.

P: 0.030% or less

Phosphorus (P) is an impurity that is unavoidably contained. That is, the lower limit of the content of P is more than 0%. P markedly increases the cracking susceptibility during hot working. Therefore, the content of P is to be 0.030% or less. A preferable upper limit of the content of P is 0.028%, more preferably 0.025%, further preferably 0.023%, and further preferably 0.020%. The content of P is preferably as low as possible. However, extremely reducing the content of P will lead to an increase in the production cost. Therefore, when industrial productivity is taken into consideration, a preferable lower limit of the content of P is 0.001%, and more preferably is 0.002%.

S: 0.0030% or less

Sulfur (S) is an impurity that is unavoidably contained. That is, the lower limit of the content of S is more than 0%. S markedly increases the cracking susceptibility during hot working. Therefore, the content of S is to be 0.0030% or less. A preferable upper limit of the content of S is 0.0025%, more preferably 0.0020%, further preferably 0.0015%, and further preferably 0.0010%. The content of S is preferably as low as possible. However, extremely reducing the content of S will lead to an increase in the production cost. Therefore, when industrial productivity is taken into consideration, a preferable lower limit of the content of S is 0.0001%, and more preferably is 0.0002%.

Cr: 21.00 to 28.00%

Chromium (Cr) increases the corrosion resistance of the base metal 10. If the content of Cr is too low, even if the contents of other elements are within the range of the present embodiment, the pitting resistance of the base metal 10 will decrease. On the other hand, if the content of Cr is too high, even if the contents of other elements are within the range of the present embodiment, intermetallic compounds such as sigma phase will be liable to precipitate, and the hot workability, toughness, and corrosion resistance of the base metal 10 will decrease. Therefore, the content of Cr is to be 21.00 to 28.00%. A preferable lower limit of the content of Cr is 21.50%, more preferably 22.00%, further preferably 22.50%, further preferably 23.00%, further preferably 23.50%, and further preferably 24.00%. A preferable upper limit of the content of Cr is 27.50%, more preferably 27.00%, further preferably 26.50%, and further preferably 26.00%.

Ni: 4.00 to 8.00%

Nickel (Ni) stabilizes the austenite phase. If the content of Ni is too low, even if the contents of other elements are within the range of the present embodiment, the amount of austenite in the base metal 10 will be reduced, and the corrosion resistance and strength of the base metal 10 will decrease. On the other hand, if the content of Ni is too high, even if the contents of other elements are within the range of the present embodiment, the amount of ferrite in the base metal 10 will be reduced, and the corrosion resistance and strength of the base metal 10 will decrease. In such case, in addition, sigma phase will precipitate in the base metal 10. Therefore, the content of Ni is to be 4.00 to 8.00%. A preferable lower limit of the content of Ni is 4.50%, more preferably 5.00%, further preferably 5.50%, and further preferably 6.00%. A preferable upper limit of the content of Ni is 7.50%, and more preferably is 7.00%.

Mo: 2.00 to 4.50%

Molybdenum (Mo) increases the corrosion resistance of the base metal 10, similarly to Cr. If the content of Mo is too low, even if the contents of other elements are within the range of the present embodiment, the pitting resistance and the crevice corrosion resistance of the base metal 10 will decrease. On the other hand, if the content of Mo is too high, even if the contents of other elements are within the range of the present embodiment, sigma phase will be liable to precipitate, and the productivity of the base metal 10 will decrease, and the toughness and corrosion resistance of the base metal 10 will also decrease. Therefore, the content of Mo is to be 2.00 to 4.50%. A preferable lower limit of the content of Mo is 2.20%, more preferably 2.40%, and further preferably 2.50%. A preferable upper limit of the content of Mo is 4.30%, and more preferably is 4.00%.

Cu: 0.01 to 4.00%

Copper (Cu) increases the acid resistance of the base metal 10 in a sulfuric acid or hydrogen sulfide environment. If the content of Cu is too low, even if the contents of other elements are within the range of the present embodiment, the acid resistance of the base metal 10 will decrease. However, if the content of Cu is too high, even if the contents of other elements are within the range of the present embodiment, the hot workability of the base metal 10 will decrease. Therefore, the content of Cu is to be 0.01 to 4.00%. A preferable lower limit of the content of Cu is 0.05%, more preferably 0.10%, further preferably 0.15%, further preferably 0.20%, further preferably 0.25%, further preferably 0.30%, further preferably 0.35%, further preferably 0.40%, and further preferably 0.45%. A preferable upper limit of the content of Cu is 3.50%, more preferably 3.00%, further preferably 2.50%, further preferably 2.00%, further preferably 1.50%, and further preferably 1.00%.

Sol. Al: 0.0010 to 0.0500%

Aluminum (Al) deoxidizes the steel. If the content of Al is too low, even if the contents of other elements are within the range of the present embodiment, this effect will not be obtained. However, if the content of Al is too high, even if the contents of other elements are within the range of the present embodiment, AlN will precipitate and the toughness and corrosion resistance of the base metal 10 will decrease. Therefore, the content of sol. Al is to be 0.0010 to 0.0500%. A preferable lower limit of the content of Al is 0.0030%, more preferably 0.0050%, further preferably 0.0080%, further preferably 0.0100%, and further preferably 0.0120%. A preferable upper limit of the content of Al is 0.0400%, more preferably 0.0300%, and further preferably 0.0200%. Note that, as used in the present description, the term "content of Al" means the content of "acid-soluble Al", that is, the content of sol. Al.

N: 0.080 to 0.400%

Nitrogen (N) stabilizes the austenite phase and also increases the PREW and enhances the pitting resistance and crevice corrosion resistance of the base metal 10. If the content of N is too low, even if the contents of other elements are within the range of the present embodiment, the balance between the ferrite phase and the austenite phase of the base metal 10 will be lost, and the corrosion resistance and strength of the base metal 10 will decrease. However, if the content of N is too high, even if the contents of other elements are within the range of the present embodiment, defects such as blowholes will occur during welding. Therefore, the content of N is to be 0.080 to 0.400%. A preferable lower limit of the content of N is 0.100%, more preferably 0.150%, and further preferably 0.200%. A preferable upper limit of the content of N is 0.370%, more preferably 0.350%, and further preferably 0.320%.

B: 0.0001 to 0.0100%

Boron (B) segregates at grain boundaries at high temperatures, and enhances the hot workability of the base metal 10. B is also effective as a deoxidizer. If the content of B is too low, these effects will not be obtained even if the contents of other elements are within the range of the present embodiment. However, if the content of B is too high, even if the contents of other elements are within the range of the present embodiment, solidification segregation will occur in the course of solidification of the weld zone, and the solidification cracking susceptibility of the weld metal 20 will increase. Therefore, the content of B is to be 0.0001 to 0.0100%. A preferable lower limit of the content of B is 0.0005%, more preferably 0.0010%, and further preferably 0.0015%. A preferable upper limit of the content of B is 0.0080%, further preferably 0.0070%, further preferably 0.0060%, further preferably 0.0050%, further preferably 0.0040%, further preferably 0.0030%, and further preferably 0.0020%.

The balance in the base metal 10 according to the present embodiment is Fe and impurities. Here, the term "impurities" refers to elements which, when industrially producing the base metal 10, are mixed in from ore or scrap that is used as a raw material, or from the production environment or the like, and which are allowed within a range that does not adversely affect the duplex stainless steel welded joint 1 according to the present embodiment. Impurities in the base metal 10 are, for example, O (oxygen) and REM.

[Optional elements]

The aforementioned base metal 10 may further contain one element or more selected from the following first group to fifth group in lieu of a part of Fe.

[First group]

The chemical composition of the base metal 10 may further contain W in lieu of a part of Fe. W is an optional element, and forms oxides and thereby enhances the corrosion resistance of the base metal 10.

W: 0 to 4.00%

Tungsten (W) is an optional element, and need not be contained. That is, the content of W may be 0%. When contained, W forms stable oxides and thereby enhances the corrosion resistance of the base metal 10 in an environment with a low pH. If even a small amount of W is contained, the aforementioned effect will be obtained to a certain extent. However, if the content of W is too high, even if the contents of other elements are within the range of the present embodiment, W will promote the precipitation of intermetallic compounds, and consequently the toughness of the base metal 10 will decrease. Therefore, the content of W is to be 0 to 4.00%. A preferable lower limit of the content of W is more than 0%, more preferably 0.01%, further preferably 0.50%, and further preferably 1.00%. A preferable upper limit of the content of W is 3.50%, more preferably 3.00%, and further preferably 2.50%.

[Second group]

The chemical composition of the base metal 10 may further contain one or more elements selected from a group consisting of Nb, V and Ta in lieu of a part of Fe. Each of these elements is an optional element, and each of these elements forms carbides and enhances the corrosion resistance of the base metal 10.

Nb: 0 to 0.10%

Niobium (Nb) is an optional element, and need not be contained. That is, the content of Nb may be 0%. When contained, Nb combines with C to form carbides. As a result, formation of Cr carbides at grain boundaries is suppressed, and the corrosion resistance of the base metal 10 is enhanced. If even a small amount of Nb is contained, the aforementioned effect will be obtained to a certain extent. However, if the content of Nb is too high, even if the contents of other elements are within the range of the present embodiment, an excessive amount of carbides will be precipitated and therefore, on the contrary, the corrosion resistance of the base metal 10 will decrease. Therefore, the content of Nb is to be 0 to 0.10%. A preferable lower limit of the content of Nb is more than 0%, more preferably is 0.01%, and further preferably is 0.02%. A preferable upper limit of the content of Nb is 0.08%, more preferably is 0.07%, further preferably is 0.05%, and further preferably is 0.03%.

V: 0 to 0.20%

Vanadium (V) is an optional element, and need not be contained. That is, the content of V may be 0%. When contained, V combines with C to form carbides. As a result, formation of Cr carbides at grain boundaries is suppressed, and the corrosion resistance of the base metal 10 is enhanced. If even a small amount of V is contained, the aforementioned effect will be obtained to a certain extent. However, if the content of V is too high, even if the contents of other elements are within the range of the present embodiment, an excessive amount of carbides will be precipitated and therefore, on the contrary, the corrosion resistance of the base metal 10 will decrease. Therefore, the content of V is to be 0 to 0.20%. A preferable lower limit of the content of V is more than 0%, more preferably is 0.01%, further preferably is 0.02%, and further preferably is 0.05%. A preferable upper limit of the content of V is 0.18%, more preferably is 0.15%, further preferably is 0.10%, further preferably is 0.08%, further preferably is 0.07%, and further preferably is 0.05%.

Ta: 0 to 0.30%

Tantalum (Ta) is an optional element, and need not be contained. That is, the content of Ta may be 0%. When contained, Ta combines with C to form carbides. As a result, formation of Cr carbides at grain boundaries is suppressed, and the corrosion resistance of the base metal 10 is enhanced. If even a small amount of Ta is contained, the aforementioned effect will be obtained to a certain extent. However, if the content of Ta is too high, even if the contents of other elements are within the range of the present embodiment, an excessive amount of carbides will be precipitated and therefore, on the contrary, the corrosion resistance of the base metal 10 will decrease. Therefore, the content of Ta is to be 0 to 0.30%. A preferable lower limit of the content of Ta is more than 0%, more preferably 0.01%, further preferably 0.02%, further preferably 0.05%, further preferably 0.10%, and further preferably 0.15%. A preferable upper limit of the content of Ta is 0.27%, more preferably 0.25%, further preferably 0.20%, further preferably 0.15%, further preferably 0.10%, further preferably 0.08%, further preferably 0.07%, and further preferably 0.05%.

[Third group]

The chemical composition of the base metal 10 may further contain Co in lieu of a part of Fe. Co is an optional element, and enhances the acid resistance of the base metal 10.

Co: 0 to 1.00%

Cobalt (Co) is an optional element, and need not be contained. That is, the content of Co may be 0%. When contained, Co enhances the acid resistance of the base metal 10, and also stabilizes the austenite phase. If even a small amount of Co is contained, the aforementioned effects will be obtained to a certain extent. However, if the content of Co is too high, even if the contents of other elements are within the range of the present embodiment, costs will increase. Therefore, the content of Co is to be 0 to 1.00%. A preferable lower limit of the content of Co is 0.01%, more preferably 0.05%, further preferably 0.10%, further preferably 0.15%, further preferably 0.20%, further preferably 0.25%, and further preferably 0.30%. A preferable upper limit of the content of Co is 0.90%, more preferably 0.80%, further preferably 0.70%, further preferably 0.65%, and further preferably 0.60%.

[Fourth group]

The chemical composition of the base metal 10 may further contain Sn in lieu of a part of Fe. Sn is an optional element, and enhances the pitting resistance of the base metal 10.

Sn: 0 to 0.020%

Tin (Sn) is an optional element, and need not be contained. That is, the content of Sn may be 0%. When contained, Sn enhances the pitting resistance of the base metal 10. If even a small amount of Sn is contained, the aforementioned effect will be obtained to a certain extent. However, if the content of Sn is too high, even if the contents of other elements are within the range of the present embodiment, the hot workability of the base metal 10 will decrease. Furthermore, if the content of Sn is too high, even if the contents of other elements are within the range of the present embodiment, the weld penetration depth will increase and the wettability of the molten metal during welding will decrease. Therefore, the content of Sn is to be 0 to 0.020%. A preferable lower limit of the content of Sn is 0.001%, more preferably 0.002%, and further preferably 0.003%. A preferable upper limit of the content of Sn is 0.018%, more preferably 0.015%, further preferably 0.010%, further preferably 0.009%, further preferably 0.008%, and further preferably 0.007%.

[Fifth group]

The chemical composition of the base metal 10 may further contain one or more elements selected from the group consisting of Mg and Ca in lieu of a part of Fe. Mg and Ca are optional elements, and each of these elements enhances the hot workability of the base metal 10.

Mg: 0 to 0.0200%

Magnesium (Mg) is an optional element, and need not be contained. That is, the content of Mg may be 0%. When contained, Mg enhances the hot workability of the base metal 10. If even a small amount of Mg is contained, the aforementioned effect will be obtained to a certain extent. However, if the content of Mg is too high, even if the contents of other elements are within the range of the present embodiment, Mg will combine with oxygen and will markedly reduce the cleanliness of the base metal 10, and the hot workability of the base metal 10 will, on the contrary, decrease. Therefore, the content of Mg is to be 0 to 0.0200%. A preferable lower limit of the content of Mg is 0.0001%, more preferably 0.0002%, further preferably 0.0003%, further preferably 0.0005%, and further preferably 0.0010%. A preferable upper limit of the content of Mg is 0.0150%, more preferably 0.0130%, further preferably 0.0100%, further preferably 0.0090%, further preferably 0.0080%, further preferably 0.0070%, further preferably 0.0060%, further preferably 0.0050%, further preferably 0.0040%, further preferably 0.0030%, and further preferably 0.0020%.

Ca: 0 to 0.0100%

Calcium (Ca) is an optional element, and need not be contained. That is, the content of Ca may be 0%. When contained, Ca is effective as a deoxidizer. Ca also fixes S and thereby enhances the hot workability of the base metal 10. If even a small amount of Ca is contained, the aforementioned effects will be obtained to a certain extent. However, if the content of Ca is too high, even if the contents of other elements are within the range of the present embodiment, Ca will combine with oxygen and will markedly reduce the cleanliness of the base metal 10, and the hot workability of the base metal 10 will decrease. Therefore, the content of Ca is to be 0 to 0.0100%. A preferable lower limit of the content of Ca is 0.0001%, more preferably 0.0002%, further preferably 0.0005%, further preferably 0.0010%, and further preferably 0.0020%. A preferable upper limit of the content of Ca is 0.0090%, more preferably 0.0080%, further preferably 0.0070%, further preferably 0.0060%, further preferably 0.0050%, further preferably 0.0040%, and further preferably 0.0030%.

[Regarding microstructure of base metal]

The microstructure of the base metal 10 according to the present embodiment is composed of ferrite and austenite. In the present description, the phrase "composed of ferrite and austenite" means that the amount of any phase other than ferrite and austenite is negligibly small. For example, in the microstructure of the base metal 10 according to the present embodiment, the volume ratio of precipitates and inclusions is negligibly low compared to the volume ratio of ferrite and austenite. That is, the microstructure of the base metal 10 according to the present embodiment may contain minute amounts of precipitates, inclusions and the like, in addition to ferrite and austenite.

[Shape of base metal]

The shape of the base metal 10 is not particularly limited. The base metal 10, for example, may be any one kind selected from the group consisting of a plate material, a pipe, a steel bar, a wire rod, a forging, and a shape steel.

[Thickness of base metal]

The thickness of the base metal 10 is not particularly limited. The thickness of the base metal 10 is, for example, 1.0 to 50.0 mm.

[Regarding weld metal]

The weld metal 20 will now be described.

[Chemical composition of weld metal]

The chemical composition of the weld metal 20 according to the present embodiment contains the following elements.

C: 0.001 to 0.030%

Carbon (C) is an effective element for stabilizing the austenite phase. If the content of C is too low, even if the contents of other elements are within the range of the present embodiment, the amount of austenite in the weld metal 20 in an as-welded state will be reduced, and the corrosion resistance and strength of the weld metal 20 will decrease. On the other hand, if the content of C is too high, even if the contents of other elements are within the range of the present embodiment, carbides will be liable to precipitate, and the corrosion resistance of the weld metal 20 will decrease. Therefore, the content of C is to be 0.001 to 0.030%. A preferable lower limit of the content of C is 0.002%, more preferably 0.003%, further preferably 0.005%, further preferably 0.010%, and further preferably 0.015%. A preferable upper limit of the content of C is 0.025%, and more preferably is 0.020%.

Si: 0.05 to 0.70%

Silicon (Si) deoxidizes the steel. If the content of Si is too low, even if the contents of other elements are within the range of the present embodiment, this effect will not be sufficiently obtained. On the other hand, Si stabilizes the ferrite phase. If the content of Si is too high, even if the contents of other elements are within the range of the present embodiment, the amount of ferrite in the weld metal 20 in an as-welded state will be large and the corrosion resistance and strength of the weld metal 20 will decrease. Si also increases the viscosity of the molten metal during welding. In order to suppress the undercut 3, it is necessary to further limit the content of Si in the chemical composition of the weld metal 20 compared to the content of Si in the base metal 10. Therefore, the content of Si is to be 0.05 to 0.70%. A preferable lower limit of the content of Si is 0.08%, more preferably 0.10%, further preferably 0.20%, further preferably 0.30%, further preferably 0.40%, further preferably 0.50%, and further preferably 0.60%. A preferable upper limit of the content of Si is 0.65%, more preferably 0.60%, further preferably 0.55%, and further preferably 0.50%.

Mn: 0.05 to 0.85%

Manganese (Mn) stabilizes the austenite phase. If the content of Mn is too low, even if the contents of other elements are within the range of the present embodiment, the amount of austenite in the weld metal 20 in an as-welded state will be reduced, and the corrosion resistance and strength of the weld metal 20 will decrease. On the other hand, Mn increases the temperature coefficient of surface tension of the molten metal during welding. In other words, Mn increases the temperature dependence of the surface tension of the molten metal during welding. If the content of Mn is too high, even if the contents of other elements are within the range of the present embodiment, the wettability of the molten metal during welding will decrease. In order to suppress the undercut 3, it is necessary to further limit the content of Mn in the chemical composition of the weld metal 20 compared to the content of Mn in the base metal 10. Therefore, the content of Mn is to be 0.05 to 0.85%. A preferable lower limit of the content of Mn is 0.08%, more preferably 0.10%, further preferably 0.15%, and further preferably 0.20%. A preferable upper limit of the content of Mn is 0.80%, more preferably 0.75%, and further preferably 0.70%.

P: 0.030% or less

Phosphorus (P) is an impurity that is unavoidably contained. That is, the lower limit of the content of P is more than 0%. P markedly increases the weld crack susceptibility of the weld metal 20. Therefore, the content of P is to be 0.030% or less. A preferable upper limit of the content of P is 0.028%, more preferably 0.025%, further preferably 0.023%, and further preferably 0.020%. The content of P is preferably as low as possible. However, extremely reducing the content of P will lead to an increase in the production cost. Therefore, when industrial productivity is taken into consideration, a preferable lower limit of the content of P is 0.001%, and more preferably is 0.002%.

S: 0.0030% or less

Sulfur (S) is an impurity that is unavoidably contained. That is, the lower limit of the content of S is more than 0%. S markedly increases the weld crack susceptibility of the weld metal 20. Therefore, the content of S is to be 0.0030% or less. A preferable upper limit of the content of S is 0.0025%, more preferably 0.0020%, further preferably 0.0015%, and further preferably 0.0010%. The content of S is preferably as low as possible. However, extremely reducing the content of S will lead to an increase in the production cost. Therefore, when industrial productivity is taken into consideration, a preferable lower limit of the content of S is 0.0001%, and more preferably is 0.0002%.

Cr: 21.00 to 28.00%

Chromium (Cr) increases the corrosion resistance of the weld metal 20. If the content of Cr is too low, even if the contents of other elements are within the range of the present embodiment, the pitting resistance of the weld metal 20 will decrease. On the other hand, if the content of Cr is too high, even if the contents of other elements are within the range of the present embodiment, intermetallic compounds such as sigma phase will be liable to precipitate, and the hot workability, toughness, and corrosion resistance of the weld metal 20 will decrease. Therefore, the content of Cr is to be 21.00 to 28.00%. A preferable lower limit of the content of Cr is 21.50%, more preferably 22.00%, further preferably 22.50%, further preferably 23.00%, further preferably 23.50%, and further preferably 24.00%. A preferable upper limit of the content of Cr is 27.50%, more preferably 27.00%, further preferably 26.50%, and further preferably 26.00%.

Ni: 5.00 to 11.00%

Nickel (Ni) stabilizes the austenite phase. If the content of Ni is too low, even if the contents of other elements are within the range of the present embodiment, the amount of austenite in the weld metal will be reduced, and the corrosion resistance and strength of the weld metal 20 will decrease. On the other hand, if the content of Ni is too high, even if the contents of other elements are within the range of the present embodiment, the amount of ferrite in the weld metal 20 will be reduced, and the corrosion resistance and strength of the weld metal 20 will decrease. In such case, in addition, sigma phase will precipitate in the weld metal. In order to promote the transformation from ferrite to austenite in the rapid cooling process during welding and control the ferrite amount to an amount that has performance which is equivalent to that of the base metal 10, preferably the content of Ni in the weld metal 20 is higher than the content of Ni in the base metal 10. Therefore, the content of Ni is to be 5.00 to 11.00%. A preferable lower limit of the content of Ni is 5.50%, more preferably 6.00%, further preferably 6.50%, further preferably 7.00%, and further preferably 7.50%. A preferable upper limit of the content of Ni is 10.50%, more preferably 10.00%, further preferably 9.50%, further preferably 9.00%, further preferably 8.50%, and further preferably 8.00%.

Mo: 2.00 to 4.50%

Molybdenum (Mo) increases the corrosion resistance of the weld metal 20, similarly to Cr. If the content of Mo is too low, even if the contents of other elements are within the range of the present embodiment, the pitting resistance and the crevice corrosion resistance of the weld metal 20 will decrease. On the other hand, if the content of Mo is too high, even if the contents of other elements are within the range of the present embodiment, sigma phase will be liable to precipitate, and the productivity of the weld metal 20 will decrease, and the toughness and corrosion resistance of the weld metal 20 will also decrease. Therefore, the content of Mo is to be 2.00 to 4.50%. A preferable lower limit of the content of Mo is 2.50%, and more preferably is 3.00%. A preferable upper limit of the content of Mo is 4.30%, and more preferably is 4.00%.

Cu: 0.01 to 4.00%

Copper (Cu) increases the acid resistance of the weld metal 20 in a sulfuric acid or hydrogen sulfide environment. If the content of Cu is too low, even if the contents of other elements are within the range of the present embodiment, the acid resistance of the weld metal 20 will decrease. However, if the content of Cu is too high, even if the contents of other elements are within the range of the present embodiment, the solubility of N will decrease and denitrification during welding will accelerate, and weld defects such as blowholes will be liable to occur. Therefore, the content of Cu is to be 0.01 to 4.00%. A preferable lower limit of the content of Cu is 0.20%, more preferably 0.30%, further preferably 0.40%, and further preferably 0.50%. A preferable upper limit of the content of Cu is 3.50%, more preferably 3.00%, further preferably 2.50%, further preferably 2.00%, further preferably 1.50%, and further preferably 1.00%.

Sol. Al: 0.0010 to 0.0500%

Aluminum (Al) deoxidizes the steel. Al also reduces the amount of oxygen in the molten metal during welding, and suppresses a convex shape of the weld metal 20. If the content of Al is too low, even if the contents of other elements are within the range of the present embodiment, these effects will not be obtained. However, if the content of Al is too high, even if the contents of other elements are within the range of the present embodiment, AlN will precipitate and the toughness and corrosion resistance of the weld metal 20 will decrease. Therefore, the content of sol. Al is to be 0.0010 to 0.0500%. A preferable lower limit of the content of Al is 0.0030%, more preferably 0.0050%, further preferably 0.0100%, and further preferably 0.0150%. A preferable upper limit of the content of Al is 0.0400%, more preferably 0.0350%, further preferably 0.0300%, further preferably 0.0250%, and further preferably 0.0200%. Note that, as used in the present description, the term "content of Al" means the content of "acid-soluble Al", that is, the content of sol. Al.

N: 0.080 to 0.400%

Nitrogen (N) stabilizes the austenite phase and also increases the PREW and enhances the pitting resistance and crevice corrosion resistance of the weld metal 20. If the content of N is too low, even if the contents of other elements are within the range of the present embodiment, the balance between the ferrite phase and the austenite phase of the weld metal 20 will be lost, and the corrosion resistance and strength of the weld metal 20 will decrease. However, if the content of N is too high, even if the contents of other elements are within the range of the present embodiment, defects such as blowholes will occur during welding. Therefore, the content of N is to be 0.080 to 0.400%. A preferable lower limit of the content of N is 0.100%, more preferably 0.150%, further preferably 0.200%, and further preferably 0.250%. A preferable upper limit of the content of N is 0.370%, more preferably 0.350%, and further preferably 0.320%.

B: 0.0001 to 0.0100%

Boron (B) segregates at grain boundaries at high temperatures, and enhances the hot workability of the weld metal 20. B is also effective as a deoxidizer. If the content of B is too low, these effects will not be obtained even if the contents of other elements are within the range of the present embodiment. However, if the content of B is too high, even if the contents of other elements are within the range of the present embodiment, solidification segregation will occur in the course of solidification of the weld zone, and the solidification cracking susceptibility of the weld metal 20 will increase. Therefore, the content of B is to be 0.0001 to 0.0100%. A preferable lower limit of the content of B is 0.0005%, and more preferably is 0.0010%. A preferable upper limit of the content of B is 0.0080%, more preferably 0.0070%, further preferably 0.0060%, further preferably 0.0050%, further preferably 0.0040%, further preferably 0.0030%, and further preferably 0.0020%.

The balance in the weld metal 20 according to the present embodiment is Fe and impurities. Here, the term "impurities" refers to elements which, when forming the weld metal 20 by welding, are mixed in from the welding consumable or the base metal 10 or the like, and which are allowed within a range that does not adversely affect the duplex stainless steel welded joint 1 of the present embodiment. Impurities in the weld metal 20 are, for example, O (oxygen) and REM.

[Optional elements]

The aforementioned weld metal 20 may further contain one element or more selected from the following first group to fifth group in lieu of a part of Fe.

[First group]

The chemical composition of the weld metal 20 may further contain W in lieu of a part of Fe. W is an optional element, and forms oxides and thereby enhances the corrosion resistance of the weld metal 20.

W: 0 to 4.00%

Tungsten (W) is an optional element, and need not be contained. That is, the content of W may be 0%. When contained, W forms stable oxides, and thereby enhances the corrosion resistance of the weld metal 20 in an environment with a low pH. If even a small amount of W is contained, the aforementioned effect will be obtained to a certain extent. However, if the content of W is too high, even if the contents of other elements are within the range of the present embodiment, W will promote the precipitation of intermetallic compounds, and consequently the toughness of the weld metal 20 will decrease. Therefore, the content of W is to be 0 to 4.00%. A preferable lower limit of the content of W is more than 0%, more preferably 0.01%, further preferably 0.05%, further preferably 0.50%, further preferably 1.00%, further preferably 1.50%, and further preferably 2.00%. A preferable upper limit of the content of W is 3.50%, more preferably 3.00%, and further preferably 2.50%.

[Second group]

The chemical composition of the weld metal 20 may further contain one or more elements selected from a group consisting of Nb, V and Ta in lieu of a part of Fe. Each of these elements is an optional element, and each of these elements forms carbides and enhances the corrosion resistance of the weld metal 20.

Nb: 0 to 0.10%

Niobium (Nb) is an optional element, and need not be contained. That is, the content of Nb may be 0%. When contained, Nb combines with C to form carbides. As a result, formation of Cr carbides at grain boundaries is suppressed, and the corrosion resistance of the weld metal 20 is enhanced. If even a small amount of Nb is contained, the aforementioned effect will be obtained to a certain extent. However, if the content of Nb is too high, even if the contents of other elements are within the range of the present embodiment, an excessive amount of carbides will be precipitated and therefore, on the contrary, the corrosion resistance of the weld metal 20 will decrease. Therefore, the content of Nb is to be 0 to 0.10%. A preferable lower limit of the content of Nb is more than 0%, more preferably is 0.01%, and further preferably is 0.02%. A preferable upper limit of the content of Nb is 0.08%, more preferably is 0.07%, and further preferably is 0.05%.

V: 0 to 0.20%

Vanadium (V) is an optional element, and need not be contained. That is, the content of V may be 0%. When contained, V combines with C to form carbides. As a result, formation of Cr carbides at grain boundaries is suppressed, and the corrosion resistance of the weld metal 20 is enhanced. If even a small amount of V is contained, the aforementioned effect will be obtained to a certain extent. However, if the content of V is too high, even if the contents of other elements are within the range of the present embodiment, an excessive amount of carbides will be precipitated and therefore, on the contrary, the corrosion resistance of the weld metal 20 will decrease. Therefore, the content of V is to be 0 to 0.20%. A preferable lower limit of the content of V is more than 0%, more preferably is 0.01%, and further preferably is 0.02%. A preferable upper limit of the content of V is 0.18%, more preferably 0.15%, further preferably 0.10%, further preferably 0.08%, further preferably 0.07%, and further preferably is 0.05%.

Ta: 0 to 0.30%

Tantalum (Ta) is an optional element, and need not be contained. That is, the content of Ta may be 0%. When contained, Ta combines with C to form carbides. As a result, formation of Cr carbides at grain boundaries is suppressed, and the corrosion resistance of the weld metal 20 is enhanced. If even a small amount of Ta is contained, the aforementioned effect will be obtained to a certain extent. However, if the content of Ta is too high, even if the contents of other elements are within the range of the present embodiment, an excessive amount of carbides will be precipitated and therefore, on the contrary, the corrosion resistance of the weld metal 20 will decrease. Therefore, the content of Ta is to be 0 to 0.30%. A preferable lower limit of the content of Ta is more than 0%, more preferably is 0.01%, and further preferably is 0.02%. A preferable upper limit of the content of Ta is 0.27%, more preferably 0.25%, further preferably 0.20%, further preferably 0.15%, further preferably 0.10%, further preferably 0.08%, further preferably 0.07%, and further preferably 0.05%.

[Third group]

The chemical composition of the weld metal 20 may further contain Co in lieu of a part of Fe. Co is an optional element, and enhances the acid resistance of the weld metal 20.

Co: 0 to 1.00%

Cobalt (Co) is an optional element, and need not be contained. That is, the content of Co may be 0%. When contained, Co enhances the acid resistance of the weld metal 20, and also stabilizes the austenite phase. If even a small amount of Co is contained, the aforementioned effects will be obtained to a certain extent. However, if the content of Co is too high, even if the contents of other elements are within the range of the present embodiment, costs will increase. Therefore, the content of Co is to be 0 to 1.00%. A preferable lower limit of the content of Co is 0.01%, more preferably 0.05%, further preferably 0.10%, and further preferably 0.20%. A preferable upper limit of the content of Co is 0.90%, more preferably 0.80%, further preferably 0.70%, further preferably 0.60%, and further preferably 0.50%.

[Fourth group]

The chemical composition of the weld metal 20 may further contain Sn in lieu of a part of Fe. Sn is an optional element, and enhances the pitting resistance of the weld metal 20.

Sn: 0 to 0.020%

Tin (Sn) is an optional element, and need not be contained. That is, the content of Sn may be 0%. When contained, Sn enhances the pitting resistance of the weld metal 20. If even a small amount of Sn is contained, the aforementioned effect will be obtained to a certain extent. However, if the content of Sn is too high, even if the contents of other elements are within the range of the present embodiment, the hot workability of the weld metal 20 will decrease. Furthermore, if the content of Sn is too high, even if the contents of other elements are within the range of the present embodiment, the weld penetration depth will increase and the wettability of the molten metal during welding will decrease. Therefore, the content of Sn is to be 0 to 0.020%. A preferable lower limit of the content of Sn is 0.001%, more preferably 0.002%, and further preferably 0.003%. A preferable upper limit of the content of Sn is 0.018%, more preferably 0.015%, further preferably 0.010%, further preferably 0.009%, further preferably 0.008%, further preferably 0.007%, and further preferably 0.005%.

[Fifth group]

The chemical composition of the weld metal 20 may further contain one or more elements selected from the group consisting of Mg and Ca in lieu of a part of Fe. Mg and Ca are optional elements, and each of these elements enhances the hot workability of the weld metal 20.

Mg: 0 to 0.0200%

Magnesium (Mg) is an optional element, and need not be contained. That is, the content of Mg may be 0%. When contained, Mg enhances the wettability of the molten metal during welding by a deoxidation effect. If even a small amount of Mg is contained, the aforementioned effect will be obtained to a certain extent. However, if the content of Mg is too high, even if the contents of other elements are within the range of the present embodiment, Mg will combine with oxygen and will markedly reduce the cleanliness, and the toughness of the weld metal 20 will decrease. Therefore, the content of Mg is to be 0 to 0.0200%. A preferable lower limit of the content of Mg is 0.0001%, more preferably 0.0002%, and further preferably 0.0003%. A preferable upper limit of the content of Mg is 0.0150%, more preferably 0.0130%, further preferably 0.0100%, further preferably 0.0080%, further preferably 0.0060%, further preferably 0.0040%, further preferably 0.0020%, and further preferably 0.0010%.

Ca: 0 to 0.0100%

Calcium (Ca) is an optional element, and need not be contained. That is, the content of Ca may be 0%. When contained, Ca is effective as a deoxidizer. Ca also fixes S and thereby enhances the solidification cracking resistance of the weld metal 20. If even a small amount of Ca is contained, the aforementioned effects will be obtained to a certain extent. However, if the content of Ca is too high, even if the contents of other elements are within the range of the present embodiment, Ca will combine with oxygen and will markedly reduce the cleanliness of the weld metal 20, and the toughness of the weld metal 20 will decrease. Therefore, the content of Ca is to be 0 to 0.0100%. A preferable lower limit of the content of Ca is 0.0001%, more preferably 0.0002%, further preferably 0.0005%, further preferably 0.0010%, and further preferably 0.0015%. A preferable upper limit of the content of Ca is 0.0070%, more preferably 0.0050%, further preferably 0.0030%, and further preferably 0.0020%.

[Method for measuring chemical composition of weld metal]

The chemical composition of the weld metal 20 is measured by the following method. The surface of the weld metal 20 is shaved at a position at the center of the cap width of the weld metal 20, and machined chips are collected. The collected machined chips are dissolved in acid to obtain a liquid solution. The liquid solution is subjected to ICP-OES (Inductively Coupled Plasma Optical Emission Spectrometry), and elementary analysis of the chemical composition is performed. The content of C and the content of S are determined by a well-known high-frequency combustion method. Specifically, the content of C and the content of S are determined by combusting the aforementioned liquid solution in an oxygen gas flow by high-frequency heating, and detecting the generated carbon dioxide and sulfur dioxide. The chemical composition of the weld metal 20 can be determined by the above analysis method.

[Regarding microstructure of duplex stainless weld metal]

The microstructure of the weld metal 20 according to the present embodiment is composed of ferrite and austenite. In the present description, the phrase "composed of ferrite and austenite" means that the amount of any phase other than ferrite and austenite is negligibly small. For example, in the microstructure of the weld metal 20 according to the present embodiment, the volume ratio of precipitates and inclusions is negligibly low compared to the volume ratio of ferrite and austenite. That is, the microstructure of the weld metal 20 according to the present embodiment may contain minute amounts of precipitates, inclusions and the like, in addition to ferrite and austenite.

[Regarding Formula (1) and Formula (2)]

In the duplex stainless steel welded joint 1 of the present embodiment, the contents of the respective elements in the base metal 10 and the weld metal 20 satisfy the ranges described above, and also satisfy Formula (1) and Formula (2).

$$\mathrm{Si+3Mn} \leq 3.00 \quad (1)$$

$$0 < \mathrm{BH/BW} < 0.15 \quad (2)$$

Where, a content of a corresponding element in the weld metal 20 is substituted in percent by mass for each symbol of an element in Formula (1).
Where, a cap height (mm) of the weld metal 20 is substituted for BH in Formula (2), and a cap width (mm) of the weld metal 20 is substituted for BW in Formula (2).

[Regarding Formula (1)]

Let F1 be defined as F1 = Si+3Mn. If F1 is more than 3.00, the viscosity of the molten metal during welding will increase and, in addition, the temperature coefficient of the surface tension of molten metal during welding will increase. In such a case, the wettability of the molten metal during welding will decrease, and it will not be possible to suppress the undercut 3. Therefore, F1 is to be 3.00 or less. The upper limit of F1 is preferably 2.95, more preferably 2.90, further preferably 2.85, further preferably 2.80, further preferably 2.75, further preferably 2.70, further preferably 2.65, further preferably 2.60, further preferably 2.55, further preferably 2.50, further preferably 2.45, and further preferably 2.40. The lower limit of F1 is 0.20. The lower limit of F1 is preferably 0.40, more preferably 0.60, further preferably 0.80, further preferably 1.00, further preferably 1.20, further preferably 1.40, further preferably 1.60, further preferably 1.80, further preferably 2.00, further preferably 2.20, and further preferably 2.40.

[Regarding Formula (2)]

Referring to FIG. 2 and FIG. 3, the term "cap height (BH) of the weld metal 20" refers to the maximum height of the weld metal 20 in a case where the surface of each base metal 10 is taken as a reference (0 mm). Further, the term "cap width (BW) of the weld metal 20" refers to the width of the weld metal 20 at the surfaces of the base metals 10 in a perpendicular direction to the extending direction of the weld metal 20. In a case where the base metals 10 are pipes, the term "cap width of the weld metal 20" refers to the distance in a straight line between the boundaries between the respective base metals 10 and the weld metal 20 in the perpendicular direction to the extending direction of the weld metal 20 on the outer surface of the pipe. The cap height and the cap width of the weld metal 20 are measured using a well-known welding gauge or the like. Note that, when the base metal 10 is a pipe, the cap height is measured by bringing a well-known gauge into contact with the outer surface of the base metal 10 in a manner so that the longitudinal direction of the gauge becomes parallel to the axial direction of the base metal 10.

Let F2 be defined as F2 = BH/BW. If F2 is more than 0.15, the cap height is too high relative to the cap width. In this case, as a result of the surface tension of the molten metal during welding increasing, the formed weld metal 20 is liable to become a convex shape, and the undercut 3 is liable to occur. However, if F2 is a negative value, it indicates that the thickness of the weld metal 20 is thin compared to the thickness of the base metal 10. In this case, there will be a weld defect referred to as an "underfill". In such case, the strength of the duplex stainless steel welded joint 1 will decrease. Therefore, F2 is to be more than 0 and less than 0.15. The upper limit of F2 is preferably 0.14, more preferably 0.13, further preferably 0.12, further preferably 0.11, further preferably 0.10, further preferably 0.09, and further preferably 0.08. The lower limit of F2 is preferably 0.01, more preferably 0.02, further preferably 0.04, further preferably 0.05, further preferably 0.06, further preferably 0.07, further preferably 0.08, further preferably 0.09, and further preferably 0.10.

In the duplex stainless steel welded joint 1 of the present embodiment, the wettability of the molten metal during welding is increased by satisfying Formula (1), and furthermore the shape of the weld metal 20 is adjusted so as to satisfy Formula (2). The undercut 3 can be suppressed and the fatigue characteristics are improved only when the base metal 10 and the weld metal 20 have the aforementioned chemical compositions and the weld metal 20 satisfies Formula (1) and Formula (2).

[Regarding Formula (3) and Formula (4)]

In the duplex stainless steel welded joint 1 of the present embodiment, the contents of the respective elements in the base metal 10 and the weld metal 20 satisfy the ranges described above, and Formula (1) and Formula (2) are satisfied, and in a case where the thickness of the base metal 10 is 2.5 mm or less, in addition, preferably Formula (3) and Formula (4) are satisfied.

$$Si+4Mn \leq 3.75 \quad (3)$$

$$0 < BH/BW \leq 0.5/(6.0\text{-}0.85WT) \quad (4)$$

Where, a content of a corresponding element in the weld metal 20 is substituted in percent by mass for each symbol of an element in Formula (3).

Where, in Formula (4), a cap height (mm) of the weld metal 20 is substituted for BH, a cap width (mm) of the weld metal 20 is substituted for BW, and a thickness (mm) of the base metal 10 is substituted for WT.

[Regarding Formula (3)]

Let F3 be defined as F3 = Si+4Mn. If F3 is 3.75 or less, the wettability of the molten metal during welding is further increased and, furthermore, the undercut 3 can be suppressed. Therefore, preferably F3 is 3.75 or less. The upper limit of F3 is more preferably 3.70, further preferably 3.65, further preferably 3.60, further preferably 3.55, further preferably 3.50, further preferably 3.45, further preferably 3.40, further preferably 3.35, further preferably 3.30, further preferably 3.25, further preferably 3.20, further preferably 3.15, further preferably 3.10, further preferably 3.05, and further preferably 3.00. The lower limit of F3 is preferably 0.25. The lower limit of F3 is more preferably 0.50, further preferably 0.70, further preferably 1.00, further preferably 1.50, further preferably 2.00, further preferably 2.30, further preferably 2.50, and further preferably 3.00.

[Regarding Formula (4)]

If the base metal 10 is thin, the base metal 10 will be thin relative to the undercut 3, and the fatigue life will be liable to decrease. Therefore, on the premise that F2 (BH/BW) is within a range of more than 0 to less than 0.15, it is preferable to further limit F2 according to the thickness of the base metal 10. Specifically, in a case where the thickness of the base metal 10 is 2.5 mm or less, if F2 is 0.5/(6.0-0.85WT) or less, the undercut 3 can be further suppressed. A more preferable upper limit of F2 is 0.4/(6.0-0.85WT), further preferably is 0.3/(6.0-0.85WT), and further preferably is 0.2/(6.0-0.85WT).

[Method for producing duplex stainless steel welded joint]

Hereunder, a method for producing the duplex stainless steel welded joint 1 of the present embodiment is described. The method for producing the duplex stainless steel welded joint 1 described hereinafter is one example of a method for producing the duplex stainless steel welded joint 1 of the present embodiment. Accordingly, the duplex stainless steel welded joint 1 having the structure described above may be produced by another production method that is different from the production method described hereinafter. However, the production method described hereinafter is a preferable example of a method for producing the duplex stainless steel welded joint 1 of the present embodiment.

The method for producing the duplex stainless steel welded joint 1 of the present embodiment includes a process of preparing a pair of base metals 10 (preparation process of base metal), and a process of butting together the ends of the pair of base metals 10 and performing welding to form the weld metal 20 (formation process of weld metal). Hereunder, each process is described in detail.

[Preparation process of base metal]

First, a pair of the base metals 10 is prepared. The base metal 10 may be supplied by a third party, or the producer of the duplex stainless steel welded joint 1 may produce and prepare the base metal 10. Hereunder, an example of a method for producing the base metal 10 in the case of producing the base metal 10 is described.

The method for producing the base metal 10 includes: a process of preparing a starting material for the base metal 10 (preparation process); as required, a process of subjecting the starting material to hot working to produce an intermediate material (hot working process); as required, a process of subjecting the intermediate material after the hot working process to a pickling treatment, and thereafter performing cold working (cold working process); and, as required, a process of performing a solution heat treatment on the starting material prepared in the starting material preparation process, the intermediate material after the hot working process, or the intermediate material after the cold working (solution heat treatment process). As required, the method for producing the base metal 10 includes a process of removing scale on the surface of the starting material or intermediate material (scale removal process). Each of these processes is described hereunder.

[Preparation process]

In the preparation process, a starting material having the aforementioned chemical composition is prepared. The starting material may be supplied by a third party or may be produced. The starting material may be an ingot, a slab, a bloom, or a billet. In the case of producing the starting material, the starting material is produced by the following method. A molten metal alloy having the aforementioned chemical composition is produced. The produced molten metal alloy is used to produce an ingot by an ingot-making process. The produced molten metal alloy may also be used to produce a slab, a bloom, a billet, or a hollow shell by a casting process. Hot working may be performed on the produced ingot, slab, or bloom to produce a billet or a hollow shell. For example, hot forging may be performed on the ingot to produce a cylindrical billet, and the billet may be used as a starting material (cylindrical starting material). In such a case, although the temperature of the starting material immediately before the start of the hot forging is not particularly limited, for example the temperature is 900 to 1300°C. Further, a starting material (pipe) may be produced by a well-known centrifugal casting process.

[Hot working process]

A hot working process is performed as required. That is, a hot working process need not necessarily be performed. In the case of performing a hot working process, the starting material is subjected to hot working to produce an intermediate material having a predetermined shape. If the base metal 10 is a plate material, a plate-like intermediate material is produced by hot rolling. If the base metal 10 is an alloy pipe, a through-hole is formed in the cylindrical starting material along the central axis thereof by machining. The cylindrical starting material in which the through-hole is formed is subjected to a hot-extrusion process to produce an intermediate material (shell). Although the heating temperature of the starting material in the hot working process is not particularly limited, for example the temperature is 900 to 1300°C.

In the hot working process, instead of the hot extrusion, an intermediate material (shell) may be produced by performing piercing-rolling according to the Mannesmann process on the cylindrical starting material. The temperature of the starting material before the piercing-rolling is, for example, 900 to 1300°C.

[Cold working process]

A cold working process is performed as required. That is, a cold working process need not necessarily be performed. In the case of performing a cold working process, cold working is performed after performing a pickling treatment on the intermediate material. When the base metal 10 is a plate material, cold rolling is performed. When the base metal 10 is a pipe, cold drawing is performed. Although the reduction of area in the cold working process is not particularly limited, for example, the reduction of area is 10 to 90%.

[Solution heat treatment process]

A solution heat treatment process is performed as required. That is, a solution heat treatment process need not necessarily be performed. In the case of performing a solution heat treatment process, a solution heat treatment is performed on the starting material prepared in the preparation process, the intermediate material after the hot working process, or the intermediate material after the cold working process. Precipitates in the starting material or intermediate material are dissolved by the solution heat treatment.

The solution heat treatment is performed by the following method. The starting material or intermediate material is charged into a heat treatment furnace in which the atmosphere inside the furnace is an air atmosphere. Here, the term "air atmosphere" means an atmosphere containing 78% or more nitrogen by volume and 20% or more oxygen by volume, which are gases that constitute the atmosphere. Inside the furnace with the air atmosphere, the starting material or intermediate material is heated to 1000 to 1300°C, and then held at 1000 to 1300°C. The holding time is 1 to 60 minutes. The starting material or intermediate material after the heat treatment is rapidly cooled. The rapid cooling method is, for example, well-known water cooling, or well-known oil cooling.

[Scale removal process]

A scale removal process is performed as required. That is, a scale removal process need not necessarily be performed. In the case of performing a scale removal process, scale is removed from the surface of the starting material prepared in the preparation process, the intermediate material after the hot working process, the intermediate material after the cold working process, or the starting material or intermediate material after the solution heat treatment. The method used to remove scale may be a method that removes scale by blasting, grinding, or the like, or a method that removes scale by performing a pickling treatment.

In the case of performing a pickling treatment, the pickling conditions are not particularly limited. Preferably, a mixed solution of nitric acid and hydrofluoric acid is used as the pickling solution. The mixed solution is, for example, an aqueous solution containing 5.0 to 8.0% nitric acid by volume and 5.0 to 8.0% hydrofluoric acid by volume. The temperature of the pickling solution in the pickling solution bath is adjusted to 30 to 50°C, and the starting material or intermediate material is immersed in the pickling solution bath. The immersion time is, for example, 0.5 to 5.0 hours. Scale is sufficiently removed from the starting material surface or the surface of the intermediate material by the above pickling treatment.

The term "blasting" refers to a process in which kinetic energy is applied to an abrasive to cause the abrasive to collide against the surface of the starting material or intermediate material so as to cut or strike the metal surface. In the case of removing scale by blasting, the blasting is, for example, sandblasting using sand as an abrasive, shotblasting using steel particles as an abrasive, grit blasting using cast iron grit, cast steel grit, alumina grit, silicon carbide grit or the like as an abrasive, or shotblasting using cast iron shot, cast steel shot, cut wire or the like as an abrasive.

The base metal 10 is produced by the above processes.

A bevel may be formed on the prepared base metal 10. Specifically, a bevel may be formed at the end of the base metal 10 by a well-known processing method. The bevel shape may be the V shape illustrated in FIG. 3, or may be a shape other than the shape illustrated in FIG. 3.

[Formation process of weld metal]

In the formation process of weld metal, the prepared base metal 10 is subjected to welding to form the weld metal 20, and thereby produce the duplex stainless steel welded joint 1. Specifically, two base metals 10 are prepared. The ends of the prepared base metals 10 are butted together. The pair of ends that are butted together are subjected to welding using a welding consumable to thereby form the weld metal 20 having the aforementioned chemical composition.

[Regarding welding consumable]

The welding consumable for forming the weld metal 20 that is described above consists of, in mass%, C: 0.001 to 0.030%, Si: 0.05 to 0.60%, Mn: 0.05 to 0.60%, P: 0.025% or less, S: 0.0030% or less, Cr: 21.00 to 28.00%, Ni: 6.00 to 11.00%, Mo: 2.00 to 4.50%, Cu: 0 to 4.00%, sol. Al: 0.0010 to 0.0500%, N: 0.0800 to 0.4000%, B: 0.0001 to 0.0030%, W: 0 to 4.00%, Nb: 0 to 0.100%, V: 0 to 0.10%, Ta: 0 to 0.10%, Co: 0 to 1.00%, Sn: 0 to 0.010%, Mg: 0 to 0.02000%, Ca: 0 to 0.0100%, REM: 0 to 0.100%, and O: 0.0150% or less, with the balance being Fe and impurities.

The welding consumable described above may be supplied by a third party, or a welding consumable produced by the producer of the duplex stainless steel welded joint 1 may be used. In the case of producing a welding consumable, casting is performed using molten metal for a welding consumable having the aforementioned chemical composition to form the molten metal into an ingot. The ingot is subjected to hot working to produce a welding consumable. The welding consumable after hot working may be further subjected to cold working. Further, a well-known heat treatment may be performed on the welding consumable. The heat treatment is, for example, a solution heat treatment that is the same as the solution heat treatment performed with respect to the base metal 10. The heat treatment need not necessarily be performed. The welding consumable may be a rod shape (including a wire shape), or may be in the shape of a small block.

The weld metal 20 is formed using the welding consumable having the aforementioned chemical composition. Examples of the welding method include gas tungsten arc welding (GTAW), shielded metal arc welding (SMAW), flux cored metal arc welding (FCAW), gas metal arc welding (GMAW), and submerged arc welding (SAW).

At such time, the distance between the ends of the pair of base metals 10 that are butted together and the feeding amount of the welding consumable during welding are adjusted to adjust the amount of dilution by the base metals 10 and make the content of each element in the chemical composition of the weld metal 20 fall within the range of the present embodiment, and to also make F1 and F2 satisfy the expressions $F1 \leq 3.00$, and $0 < F2 < 0.15$. In a case where a bevel is formed in each base metal 10, the thickness of the root face of the bevel may be adjusted. By adjusting these conditions, it is possible to make the content of each element in the chemical composition of the weld metal 20 fall within the range of the present embodiment and also to adjust so that F1 and F2 satisfy the expressions $F1 \leq 3.00$, and $0 < F2 < 0.15$.

The welded joint 1 according to the present embodiment can be produced by the production processes described above. Note that, a method for producing the welded joint 1 according to the present embodiment is not limited to the production method described above. A method for producing the welded joint 1 of the present embodiment is not particularly limited to the production method described above as long as, in the welded joint 1, the content of each element in the chemical composition of the base metal 10 is within the aforementioned range, the content of each element in the chemical composition of the weld metal 20 is within the aforementioned range, and F1 and F2 satisfy the expressions $F1 \leq 3.00$, and $0 < F2 < 0.15$.

EXAMPLES

[Production of base metal]

Molten steels to be used for base metals shown in Table 1 were produced. A blank space in a column in Table 1 means that the content of the corresponding element was at an impurity level.

[Table 1]

TABLE 1

| Base Metal No. | Chemical Composition of Base Metal (mass%; balance is Fe and impurities) | | | | | | | | | | | | | | | | | | | |
|---|---|---|---|---|---|---|---|---|---|---|---|---|---|---|---|---|---|---|---|---|
| | C | Si | Mn | P | S | Cr | Ni | Mo | Cu | sol.Al | N | B | W | Nb | V | Ta | Co | Sn | Mg | Ca |
| A1 | 0.014 | 0.71 | 0.86 | 0.025 | 0.0001 | 25.09 | 6.14 | 3.18 | 0.51 | 0.0210 | 0.300 | 0.0012 | | | | | | | | 0.0020 |
| A2 | 0.018 | 0.68 | 0.91 | 0.022 | 0.0004 | 25.34 | 7.06 | 4.02 | 0.28 | 0.0160 | 0.280 | 0.0014 | | | | | | | | |
| A3 | 0.022 | 0.66 | 0.81 | 0.023 | 0.0003 | 25.12 | 6.88 | 3.22 | 0.49 | 0.0140 | 0.275 | 0.0013 | 1.99 | | | | | | | |
| A4 | 0.019 | 0.62 | 0.88 | 0.023 | 0.0004 | 25.38 | 7.24 | 3.89 | 0.43 | 0.0230 | 0.288 | 0.0016 | | 0.02 | | | | | | |
| A5 | 0.015 | 0.58 | 0.79 | 0.021 | 0.0004 | 25.42 | 6.32 | 3.76 | 0.47 | 0.0170 | 0.316 | 0.0015 | | | 0.16 | | | | | |
| A6 | 0.012 | 0.66 | 0.84 | 0.026 | 0.0003 | 25.28 | 5.88 | 4.11 | 0.35 | 0.0140 | 0.298 | 0.0016 | | | | 0.18 | | | | |
| A7 | 0.012 | 0.59 | 0.93 | 0.022 | 0.0005 | 25.19 | 6.25 | 3.92 | 0.41 | 0.0060 | 0.305 | 0.0023 | | | | | 0.37 | | | |
| A8 | 0.014 | 0.61 | 0.94 | 0.025 | 0.0006 | 25.33 | 7.08 | 4.06 | 0.27 | 0.0270 | 0.327 | 0.0028 | | | | | | 0.01 | | |
| A9 | 0.018 | 0.60 | 0.85 | 0.027 | 0.0004 | 25.65 | 7.14 | 3.74 | 0.33 | 0.0190 | 0.271 | 0.0021 | | | | | | | 0.001 | |
| A10 | 0.016 | 0.74 | 1.12 | 0.024 | 0.0007 | 26.53 | 7.47 | 2.86 | 1.46 | 0.0260 | 0.297 | 0.0015 | 2.05 | 0.01 | | | | | | |
| A11 | 0.024 | 0.63 | 0.90 | 0.025 | 0.0006 | 25.72 | 7.01 | 3.69 | 0.67 | 0.0280 | 0.318 | 0.0011 | | | | 0.22 | 0.41 | | | |
| A12 | 0.017 | 0.68 | 0.91 | 0.021 | 0.0003 | 25.61 | 6.99 | 4.07 | 0.51 | 0.0340 | 0.302 | 0.0027 | | | 0.11 | | | 0.02 | | 0.003 |
| A13 | 0.018 | 0.72 | 0.97 | 0.019 | 0.0005 | 25.57 | 6.86 | 2.45 | 0.58 | 0.0240 | 0.333 | 0.0022 | 2.03 | | | | | | 0.001 | |
| A14 | 0.013 | 0.66 | 0.87 | 0.023 | 0.0004 | 25.41 | 6.77 | 3.95 | 0.46 | 0.0160 | 0.299 | 0.0020 | | 0.03 | | | 0.35 | | | |
| A15 | 0.011 | 0.65 | 0.84 | 0.021 | 0.0004 | 25.73 | 6.23 | 2.81 | 0.62 | 0.0290 | 0.284 | 0.0019 | 1.85 | | 0.06 | | | | | 0.003 |

Cylindrical ingots having an outer diameter of 120 mm and a weight of 30 kg were produced using the molten steels. Each ingot was subjected to hot forging to produce a steel bar having a diameter of 180 mm. In addition, hot rolling and cold rolling were performed to produce a seamless pipe with an outer diameter of 15.12 mm and a wall thickness of 1.21 mm, or a seamless pipe with an outer diameter of 30.72 mm and a wall thickness of 2.66 mm. Each seamless pipe was subjected to a solution heat treatment at 1100°C for 10 minutes, and then cooled by water cooling. Each seamless pipe was cut to a length of 300 mm. In the seamless pipes with a wall thickness of 2.66 mm, a groove was formed to simulate a bevel. Specifically, at a central part in the longitudinal direction, groove processing was performed to form a groove with a root thickness of 1.5 mm, a protrusion length on one side of 2 mm, and an inclination on one side of 20°.

[Production of welding consumable]

Molten steels to be used for welding consumables having the chemical compositions shown in Table 2 were produced. A blank space in a column in Table 2 means that the content of the corresponding element was at an impurity level.

[Table 2]

TABLE 2

| Welding Consumable No. | Chemical Composition of Welding Consumable (mass%; balance is Fe and impurities) | | | | | | | | | | | | | |
|---|---|---|---|---|---|---|---|---|---|---|---|---|---|---|
| | C | Si | Mn | P | S | Cr | Ni | Mo | Cu | sol.Al | N | B | W | Ca |
| B1 | 0.020 | 0.34 | 0.68 | 0.002 | 0.0020 | 25.55 | 9.14 | 3.12 | 0.40 | 0.0130 | 0.2700 | 0.0014 | 2.09 | 0.0005 |
| B2 | 0.011 | 0.28 | 0.35 | 0.010 | 0.0010 | 25.44 | 8.98 | 3.01 | 0.01 | 0.0150 | 0.2760 | 0.0015 | 2.02 | 0.0015 |
| B3 | 0.016 | 0.31 | 0.38 | 0.012 | 0.0010 | 25.35 | 9.07 | 3.98 | 0.22 | 0.0160 | 0.2840 | 0.0014 | | |

Ingots having a weight of 30 kg were produced using a vacuum furnace. Each ingot was subjected to hot forging and hot rolling and thereby made into a steel bar of 30 mm in diameter. Thereafter, cold rolling and intermediate annealing were repeated to produce a spool of welding consumable with a diameter of 0.8 mm.

[Formation of weld metal]

Both ends of each produced seamless pipe were fixed, and welding was performed at a central part in the longitudinal direction of the seamless pipe (in the case of the seamless pipes with a wall thickness of 2.66 mm, welding was performed at the central part that was subjected to groove processing). Specifically, using the welding consumable shown in Table 2, welding was performed by automatic gas tungsten arc welding in the downward direction (1G) while rotating the seamless pipe in the circumferential direction. Here, the welding conditions were changed for each test number, and the ratio of dilution by the base metal, and BH/BW were adjusted. Specifically, with respect to the seamless pipes having a wall thickness of 1.21 mm, the feeding rate of the welding consumable was changed within the range of 150 to 900 mm/min while adjusting the heat input within the range of 150 to 230 J/mm. Two-pass welding was applied with respect to the seamless pipes with a wall thickness of 2.66 mm. For the first welding pass, the heat input was set to about 500 J/mm, and the feeding rate of the welding consumable was set to 400 to 500 mm/min. For the second welding pass, in order to change the ratio of dilution by the base metal, the feeding rate of the welding consumable was changed within the range of 1500 to 2000 mm/min while adjusting the heat input within the range of 470 to 550 J/mm. Further, in each welding process, Ar+2%N$_2$ was used as the shielding gas, and the flow rate was set to 10 L/min. By this means, a weld metal was formed. Five samples of the weld metal were prepared for each test number.

For each formed weld metal, the cap height (mm) and the cap width (mm) were measured using a welding gauge at a position separated by 180° in the circumferential direction of the base metal from the end where welding was started. The results are shown in Table 3.

[Table 3]

TABLE 3

| Test No. | Sheet Thickness (mm) | Base Metal No. | Welding Consumable No. | Weld Metal | | | | F1 (Si+3Mn) | F2 (BH/BW) | F3 (Si+4Mn) | 0.5/ (6.0-0.85×WT) | Undercut |
|---|---|---|---|---|---|---|---|---|---|---|---|---|
| | | | | Si Content (mass%) | Mn Content (mass%) | Cap Height (mm) | Cap Width (mm) | | | | | |
| 1 | 1.21 | A1 | B1 | 0.69 | 0.85 | 0.35 | 2.71 | 3.24 | 0.13 | 4.09 | 0.10 | B |
| 2 | 1.21 | A1 | B1 | 0.66 | 0.84 | 0.47 | 3.33 | 3.18 | 0.14 | 4.02 | 0.10 | B |
| 3 | 1.21 | A1 | B2 | 0.63 | 0.77 | 0.17 | 6.69 | 2.94 | 0.03 | 3.71 | 0.10 | E |
| 4 | 1.21 | A1 | B1 | 0.64 | 0.83 | 0.56 | 3.81 | 3.13 | 0.15 | 3.96 | 0.10 | B |
| 5 | 1.21 | A1 | B1 | 0.62 | 0.82 | 0.61 | 4.04 | 3.08 | 0.15 | 3.90 | 0.10 | B |
| 6 | 1.21 | A1 | B2 | 0.61 | 0.73 | 0.24 | 7.23 | 2.80 | 0.03 | 3.53 | 0.10 | E |
| 7 | 1.21 | A1 | B2 | 0.58 | 0.70 | 0.31 | 7.77 | 2.68 | 0.04 | 3.38 | 0.10 | E |
| 8 | 1.21 | A1 | B2 | 0.55 | 0.66 | 0.38 | 8.31 | 2.53 | 0.05 | 3.19 | 0.10 | E |
| 9 | 2.66 | A1 | B1 | 0.55 | 0.78 | 0.82 | 5.45 | 2.89 | 0.15 | 3.67 | 0.13 | B |
| 10 | 2.66 | A1 | B2 | 0.48 | 0.59 | 0.53 | 9.46 | 2.25 | 0.06 | 2.84 | 0.13 | E |
| 11 | 2.66 | A1 | B1 | 0.49 | 0.76 | 1.07 | 6.84 | 2.77 | 0.16 | 3.53 | 0.13 | B |
| 12 | 2.66 | A1 | B2 | 0.41 | 0.50 | 0.70 | 10.80 | 1.91 | 0.06 | 2.41 | 0.13 | E |
| 13 | 2.66 | A1 | B1 | 0.42 | 0.72 | 1.44 | 8.48 | 2.58 | 0.17 | 3.30 | 0.13 | B |
| 14 | 2.66 | A1 | B2 | 0.31 | 0.39 | 0.93 | 12.50 | 1.48 | 0.07 | 1.87 | 0.13 | E |
| 15 | 1.21 | A1 | B2 | 0.65 | 0.78 | 0.51 | 3.53 | 2.99 | 0.14 | 3.77 | 0.10 | G |
| 16 | 1.21 | A1 | B2 | 0.64 | 0.77 | 0.54 | 3.74 | 2.95 | 0.14 | 3.72 | 0.10 | E |
| 17 | 1.21 | A2 | B3 | 0.55 | 0.73 | 0.34 | 7.99 | 2.74 | 0.04 | 3.47 | 0.10 | E |
| 18 | 2.66 | A3 | B3 | 0.40 | 0.49 | 0.75 | 9.20 | 1.87 | 0.08 | 2.36 | 0.13 | E |
| 19 | 1.21 | A4 | B3 | 0.51 | 0.68 | 0.37 | 8.20 | 2.55 | 0.05 | 3.23 | 0.10 | E |
| 20 | 1.21 | A5 | B3 | 0.47 | 0.62 | 0.39 | 8.38 | 2.33 | 0.05 | 2.95 | 0.10 | E |
| 21 | 2.66 | A6 | B3 | 0.42 | 0.50 | 0.82 | 7.92 | 1.92 | 0.10 | 2.42 | 0.13 | E |
| 22 | 2.66 | A7 | B3 | 0.39 | 0.58 | 0.69 | 7.66 | 2.13 | 0.09 | 2.71 | 0.13 | E |

| Test No. | Sheet Thickness (mm) | Base Metal No. | Welding Consumable No. | Weld Metal | | | | F1 (Si+3Mn) | F2 (BH/BW) | F3 (Si+4Mn) | 0.5/ (6.0-0.85×WT) | Undercut |
|---|---|---|---|---|---|---|---|---|---|---|---|---|
| | | | | Si Content (mass%) | Mn Content (mass%) | Cap Height (mm) | Cap Width (mm) | | | | | |
| 23 | 2.66 | A8 | B3 | 0.38 | 0.53 | 0.78 | 8.64 | 1.97 | 0.09 | 2.50 | 0.13 | E |
| 24 | 2.66 | A9 | B3 | 0.44 | 0.57 | 0.62 | 7.33 | 2.15 | 0.08 | 2.72 | 0.13 | E |
| 25 | 2.66 | A10 | B3 | 0.38 | 0.51 | 0.81 | 11.7 | 1.91 | 0.07 | 2.42 | 0.13 | E |
| 26 | 2.66 | A11 | B3 | 0.39 | 0.49 | 0.64 | 8.57 | 1.86 | 0.07 | 2.35 | 0.13 | E |
| 27 | 1.21 | A12 | B3 | 0.51 | 0.72 | 0.36 | 8.11 | 2.67 | 0.04 | 3.39 | 0.10 | E |
| 28 | 1.21 | A13 | B3 | 0.56 | 0.77 | 0.33 | 8.02 | 2.87 | 0.04 | 3.64 | 0.10 | E |
| 29 | 1.21 | A14 | B3 | 0.53 | 0.69 | 0.37 | 8.31 | 2.60 | 0.04 | 3.29 | 0.10 | E |
| 30 | 2.66 | A15 | B3 | 0.42 | 0.53 | 0.82 | 7.67 | 2.01 | 0.11 | 2.54 | 0.13 | E |
| 31 | 1.21 | A13 | B3 | 0.68 | 0.92 | 0.41 | 3.02 | 3.43 | 0.14 | 4.35 | 0.10 | B |

At a position separated by 180° in the circumferential direction of the base metal from the end where welding was started, the surface of the weld metal was shaved at the center position of the cap width of the weld metal, and machined chips were collected. In the case of the seamless pipes having a wall thickness of 2.66 mm, machined chips were collected from a weld metal portion of the second pass. A check analysis was performed on the obtained machined chips to investigate the chemical composition of the weld metal. The results are shown in Table 4. A blank space in a column in Table 4 indicates that the content of the corresponding element was at an impurity level. The contents of Si and Mn in the chemical composition of the weld metal are also shown in Table 3.

[Table 4]

TABLE 4

| Test No. | Chemical Composition of Weld Metal (mass%; balance is Fe and impurities) | | | | | | | | | | | | | | | | | | | |
|---|---|---|---|---|---|---|---|---|---|---|---|---|---|---|---|---|---|---|---|---|
| | C | Si | Mn | P | S | Cr | Ni | Mo | Cu | sol.Al | N | B | W | Nb | V | Ta | Co | Sn | Mg | Ca |
| 1 | 0.01 | 0.69 | 0.85 | 0.024 | 0.0002 | 25.11 | 6.29 | 3.18 | 0.50 | 0.0206 | 0.300 | 0.0012 | 2.12 | | | | | | | 0.0019 |
| 2 | 0.02 | 0.66 | 0.84 | 0.022 | 0.0003 | 25.15 | 6.53 | 3.17 | 0.50 | 0.0200 | 0.296 | 0.0012 | 2.12 | | | | | | | 0.0018 |
| 3 | 0.01 | 0.63 | 0.77 | 0.022 | 0.0003 | 25.15 | 6.65 | 3.15 | 0.42 | 0.0200 | 0.296 | 0.0013 | 2.10 | | | | | | | 0.0019 |
| 4 | 0.02 | 0.64 | 0.83 | 0.021 | 0.0004 | 25.17 | 6.68 | 3.17 | 0.49 | 0.0196 | 0.295 | 0.0012 | 2.11 | | | | | | | 0.0017 |
| 5 | 0.02 | 0.62 | 0.82 | 0.020 | 0.0005 | 25.19 | 6.80 | 3.17 | 0.49 | 0.0192 | 0.293 | 0.0012 | 2.11 | | | | | | | 0.0017 |
| 6 | 0.01 | 0.61 | 0.73 | 0.021 | 0.0003 | 25.18 | 6.85 | 3.14 | 0.39 | 0.0195 | 0.294 | 0.0013 | 2.09 | | | | | | | 0.0019 |
| 7 | 0.01 | 0.58 | 0.70 | 0.020 | 0.0004 | 25.20 | 7.02 | 3.13 | 0.36 | 0.0191 | 0.293 | 0.0013 | 2.09 | | | | | | | 0.0018 |
| 8 | 0.01 | 0.55 | 0.66 | 0.002 | 0.0005 | 25.23 | 7.25 | 3.11 | 0.32 | 0.0187 | 0.291 | 0.0013 | 2.08 | | | | | | | 0.0018 |
| 9 | 0.02 | 0.55 | 0.78 | 0.015 | 0.0009 | 25.29 | 7.46 | 3.15 | 0.46 | 0.0175 | 0.287 | 0.0013 | 2.11 | | | | | | | 0.0013 |
| 10 | 0.01 | 0.48 | 0.59 | 0.002 | 0.0006 | 25.28 | 7.64 | 3.09 | 0.25 | 0.0178 | 0.287 | 0.0014 | 2.07 | | | | | | | 0.0017 |
| 11 | 0.02 | 0.49 | 0.76 | 0.012 | 0.0012 | 25.36 | 7.88 | 3.15 | 0.45 | 0.0164 | 0.283 | 0.0013 | 2.10 | | | | | | | 0.0011 |
| 12 | 0.01 | 0.41 | 0.50 | 0.015 | 0.0007 | 25.34 | 8.13 | 3.06 | 0.16 | 0.0168 | 0.283 | 0.0014 | 2.05 | | | | | | | 0.0017 |
| 13 | 0.02 | 0.42 | 0.72 | 0.007 | 0.0016 | 25.45 | 8.51 | 3.13 | 0.42 | 0.0147 | 0.276 | 0.0014 | 2.09 | | | | | | | 0.0008 |
| 14 | 0.01 | 0.31 | 0.39 | 0.011 | 0.0009 | 25.42 | 8.78 | 3.02 | 0.05 | 0.0154 | 0.277 | 0.0015 | 2.03 | | | | | | | 0.0015 |
| 15 | 0.01 | 0.65 | 0.78 | 0.023 | 0.0002 | 25.14 | 6.58 | 3.15 | 0.43 | 0.0201 | 0.296 | 0.0012 | 2.10 | | | | | | | 0.0019 |
| 16 | 0.01 | 0.64 | 0.77 | 0.022 | 0.0003 | 25.15 | 7.75 | 3.15 | 0.42 | 0.0200 | 0.296 | 0.0013 | 2.10 | | | | | | | 0.0019 |
| 17 | 0.02 | 0.55 | 0.73 | 0.02 | 0.0006 | 25.3 | 7.74 | 4.00 | 0.21 | 0.0160 | 0.28 | 0.001 | | | | | | | | |
| 18 | 0.02 | 0.40 | 0.49 | 0.02 | 0.0007 | 25.3 | 8.53 | 3.77 | 0.29 | 0.0170 | 0.28 | 0.001 | 0.51 | | | | | | | |
| 19 | 0.02 | 0.51 | 0.68 | 0.02 | 0.0005 | 25.4 | 7.93 | 3.93 | 0.34 | 0.0220 | 0.290 | 0.002 | | 0.02 | | | | | | |
| 20 | 0.01 | 0.47 | 0.62 | 0.02 | 0.0005 | 25.4 | 7.41 | 3.86 | 0.38 | 0.0180 | 0.3 | 0.001 | | | 0.11 | | | | | |
| 21 | 0.01 | 0.42 | 0.50 | 0.02 | 0.0008 | 25.4 | 8.15 | 4.02 | 0.24 | 0.0130 | 0.29 | 0.001 | | | | 0.05 | | | | |
| 22 | 0.02 | 0.39 | 0.58 | 0.01 | 0.0007 | 25.3 | 8.18 | 3.95 | 0.28 | 0.0110 | 0.29 | 0.002 | | | | | 0.12 | | | |

| | | | | | | | | | | | | | | | | | | | | |
|---|---|---|---|---|---|---|---|---|---|---|---|---|---|---|---|---|---|---|---|---|
| 23 | 0.02 | 0.38 | 0.53 | 0.01 | 0.0009 | 25.4 | 8.62 | 3.97 | 0.22 | 0.0180 | 0.3 | 0.002 | | | | | 0 | | | |
| 24 | 0.02 | 0.44 | 0.57 | 0.02 | 0.0008 | 25.5 | 8.34 | 3.90 | 0.26 | 0.0160 | 0.27 | 0.002 | | | | | | 0.0005 | | |
| 25 | 0.02 | 0.38 | 0.51 | 0.01 | 0.0009 | 25.5 | 8.74 | 3.78 | 0.44 | 0.0170 | 0.28 | 0.001 | 0.35 | 0 | | | | | | |
| 26 | 0.02 | 0.39 | 0.49 | 0.02 | 0.0009 | 25.4 | 8.63 | 3.94 | 0.33 | 0.0180 | 0.29 | 0.001 | | | | 0.04 | 0.09 | | | |
| 27 | 0.02 | 0.51 | 0.72 | 0.02 | 0.0005 | 25.6 | 7.71 | 4.06 | 0.41 | 0.0240 | 0.3 | 0.002 | | | 0.07 | | | | 0 | 0.0022 |
| 28 | 0.02 | 0.56 | 0.77 | 0.02 | 0.0007 | 25.5 | 7.64 | 2.98 | 0.46 | 0.0200 | 0.32 | 0.002 | 1.30 | 0.02 | | | 0.22 | 0.0007 | | |
| 29 | 0.01 | 0.53 | 0.69 | 0.02 | 0.0007 | 25.3 | 7.68 | 3.96 | 0.38 | 0.0160 | 0.29 | 0.002 | | | 0.02 | | | | | |
| 30 | 0.01 | 0.42 | 0.53 | 0.01 | 0.0008 | 25.4 | 8.15 | 3.61 | 0.35 | 0.0220 | 0.28 | 0.002 | 0.57 | 0.02 | | | | 0.0009 | | |
| 31 | 0.02 | 0.68 | 0.92 | 0.02 | 0.0006 | 25.6 | 7.06 | 2.59 | 0.55 | 0.024 | 0.32 | 0.002 | 1.84 | | | | | 0.0009 | | |

[Undercut determination test]

At a position separated by 180° in the circumferential direction of the base metal from the end where welding was started, the base metal pipe was cut in a direction perpendicular to the extending direction of the weld metal, and a cross-sectional test piece including the weld metal was collected. For each test number, five samples were observed, and with respect to a weld toe portion in the cross-sectional test piece, the presence or absence of an undercut as well as the depth of any undercut that was present were evaluated. If the depth of an undercut was less than 0.05 mm in all five samples, the relevant test number was evaluated as E (Excellent). Even if an undercut had occurred, if the depth of the undercut was in the range of 0.05 mm or more to less than 0.10 mm, the relevant test number was evaluated as G (Good). If an undercut with a depth of 0.10 mm or more had occurred in even one of the five samples, the relevant test number was evaluated as B (Bad). The results are shown in the column "Undercut" in Table 3.

[Evaluation results]

Referring to Table 3, in Test Nos. 3, 6 to 8, 10, 12, and 14 to 30, the content of each element in the base metal and the weld metal was appropriate, and Formula (1) (Si+3Mn ≤ 3.00) and Formula (2) (0 < BH/BW < 0.15) were satisfied. Therefore, in Test Nos. 3, 6 to 8, 10, 12, and 14 to 30, the depth of an undercut was less than 0.10 mm. Thus, in Test Nos. 3, 6 to 8, 10, 12, and 14 to 30, an undercut was suppressed.

In addition, Test Nos. 3, 6 to 8, 15 to 17, 19 to 20, and 27 to 29 in which the thickness of the base metal was 2.5 mm or less were compared, and the following results were obtained. In Test Nos. 3, 6 to 8, 16, 17, 19 to 20, and 27 to 29 which satisfied Formula (3) and Formula (4) in addition to Formula (1) and Formula (2), the depth of an undercut was less than 0.05 mm. Therefore, an undercut was further suppressed in Test Nos. 3, 6 to 8, 16, 17, 19 to 20, and 27 to 29 in comparison to Test No. 15.

On the other hand, in Test Nos. 1 and 2, although the content of each element in the base metal and weld metal was appropriate, Formula (1) was not satisfied. As a result, an undercut having a depth of 0.10 mm or more occurred. Therefore, in Test Nos. 1 and 2, an undercut could not be suppressed.

In Test Nos. 4 and 5, although the content of each element in the base metal and weld metal was appropriate, Formula (1) and Formula (2) were not satisfied. As a result, an undercut having a depth of 0.10 mm or more occurred. Therefore, in Test Nos. 4 and 5, an undercut could not be suppressed.

In Test Nos. 9, 11, and 13, although the content of each element in the base metal and weld metal was appropriate, Formula (2) was not satisfied. As a result, an undercut having a depth of 0.10 mm or more occurred. Therefore, in Test Nos. 9, 11, and 13, an undercut could not be suppressed.

In Test No. 31, although the content of each element in the base metal was appropriate, Formula (1) was not satisfied. As a result, an undercut having a depth of 0.10 mm or more occurred. Therefore, in Test No. 31, an undercut could not be suppressed.

An embodiment of the present disclosure has been described above. However, the foregoing embodiment is merely an example for implementing the present disclosure. Accordingly, the present disclosure is not limited to the above embodiment, and the above embodiment can be appropriately modified and implemented within a range that does not deviate from the gist of the present invention.

REFERENCE SIGNS LIST

1    welded joint
10    base metal
20    weld metal

**Claims**

1. A duplex stainless steel welded joint, comprising:

   a base metal consisting of, in mass%,
   C: 0.001% to 0.030%,
   Si: 0.05% to 0.80%,
   Mn: 0.05% to 1.20%,
   P: 0.030% or less,

S: 0.0030% or less,
Cr: 21.00% to 28.00%,
Ni: 4.00% to 8.00%,
Mo: 2.00% to 4.50%,
Cu: 0.01 to 4.00%,
sol. Al: 0.0010 to 0.0500%,
N: 0.080% to 0.400%,
B: 0.0001 to 0.0100%,
W: 0 to 4.00%,
Nb: 0 to 0.10%,
V: 0 to 0.20%,
Ta: 0 to 0.30%,
Co: 0 to 1.00%,
Sn: 0 to 0.020%,
Mg: 0 to 0.0200%, and
Ca: 0 to 0.0100%,
with the balance being Fe and impurities;
and
a weld metal consisting of, in mass%,
C: 0.001% to 0.030%,
Si: 0.05% to 0.70%,
Mn: 0.05% to 0.85%,
P: 0.030% or less,
S: 0.0030% or less,
Cr: 21.00% to 28.00%,
Ni: 5.00% to 11.00%,
Mo: 2.00% to 4.50%,
Cu: 0.01 to 4.00%,
sol. Al: 0.0010 to 0.0500%,
N: 0.080% to 0.400%,
B: 0.0001 to 0.0100%,
W: 0 to 4.00%,
Nb: 0 to 0.10%,
V: 0 to 0.20%,
Ta: 0 to 0.30%,
Co: 0 to 1.00%,
Sn: 0 to 0.020%,
Mg: 0 to 0.0200%, and
Ca: 0 to 0.0100%,
with the balance being Fe and impurities;
wherein:

a content of each element in the base metal and the weld metal is satisfied, and Formula (1) and Formula (2) are satisfied:

$$Si+3Mn \leq 3.00 \quad (1)$$

$$0 < BH/BW < 0.15 \quad (2)$$

where, a content of a corresponding element in the weld metal is substituted in percent by mass for each symbol of an element in Formula (1), and
where, in Formula (2), a cap height (mm) of the weld metal is substituted for BH, and a cap width (mm) of the weld metal is substituted for BW.

2. The duplex stainless steel welded joint according to claim 1, wherein:

in a case where a thickness of the base metal is 2.5 mm or less, Formula (3) and Formula (4) are also satisfied:

$$Si+4Mn \leq 3.75 \quad (3)$$

$$0 < BH/BW \leq 0.5/(6.0\text{-}0.85WT) \quad (4)$$

where, a content of a corresponding element in the weld metal is substituted in percent by mass for each symbol of an element in Formula (3), and

where, in Formula (4), a cap height (mm) of the weld metal is substituted for BH, a cap width (mm) of the weld metal is substituted for BW, and a thickness (mm) of the base metal is substituted for WT.

3. The duplex stainless steel welded joint according to claim 1 or claim 2, wherein the base metal contains one or more elements selected from a group consisting of, in mass%:

W: 0.01 to 4.00%,
Nb: 0.01 to 0.10%,
V: 0.01 to 0.20%,
Ta: 0.01 to 0.30%,
Co: 0.01 to 1.00%,
Sn: 0.001 to 0.020%,
Mg: 0.0001 to 0.0200%, and
Ca: 0.0001 to 0.0100%.

4. The duplex stainless steel welded joint according to any one of claims 1 to 3, wherein the weld metal contains one or more elements selected from a group consisting of, in mass%:

W: 0.01 to 4.00%,
Nb: 0.01 to 0.10%,
V: 0.01 to 0.20%,
Ta: 0.01 to 0.30%,
Co: 0.01 to 1.00%,
Sn: 0.001 to 0.020%,
Mg: 0.0001 to 0.0200%, and
Ca: 0.0001 to 0.0100%.

FIG 1

1

10    3    20    10

FIG 2

1

BW

BH

10    20    10

FIG 3

1

BW

BH

10    20    10

**INTERNATIONAL SEARCH REPORT**

International application No.

**PCT/JP2022/015859**

**A. CLASSIFICATION OF SUBJECT MATTER**

*C22C 38/00*(2006.01)i; *B23K 9/23*(2006.01)i; *B23K 35/30*(2006.01)i; *C22C 38/54*(2006.01)i
FI:   C22C38/00 302H; C22C38/00 302Z; C22C38/54; B23K35/30 320B; B23K9/23 B

According to International Patent Classification (IPC) or to both national classification and IPC

**B. FIELDS SEARCHED**

Minimum documentation searched (classification system followed by classification symbols)

C22C38/00; B23K9/23; B23K35/30; C22C38/54

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-168616 A (NIPPON STEEL & SUMITOMO METAL CORP.) 23 September 2016 (2016-09-23) | 1-4 |
| A | JP 2001-113388 A (NIPPON YAKIN KOGYO CO., LTD.) 24 April 2001 (2001-04-24) | 1-4 |
| A | JP 2015-196894 A (NIPPON STEEL & SUMITOMO METAL CORP.) 09 November 2015 (2015-11-09) | 1-4 |
| P, A | JP 2022-20163 A (NIPPON STEEL CORP.) 01 February 2022 (2022-02-01) | 1-4 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 June 2022** | **28 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2022/015859**

| Patent document cited in search report | | | Publication date (day/month/year) | Patent family member(s) | Publication date (day/month/year) |
|---|---|---|---|---|---|
| JP | 2016-168616 | A | 23 September 2016 | (Family: none) | |
| JP | 2001-113388 | A | 24 April 2001 | (Family: none) | |
| JP | 2015-196894 | A | 09 November 2015 | (Family: none) | |
| JP | 2022-20163 | A | 01 February 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015196894 A